(19) Europäisches Patentamt / European Patent Office / Office européen des brevets

(11) **EP 2 699 335 B1**

(12) **FASCICULE DE BREVET EUROPEEN**

(45) Date de publication et mention
de la délivrance du brevet:
**31.08.2016 Bulletin 2016/35**

(51) Int Cl.:
***B01F 3/08*** (2006.01)   ***C08J 9/00*** (2006.01)
***B01F 17/00*** (2006.01)

(21) Numéro de dépôt: **12722455.8**

(22) Date de dépôt: **20.04.2012**

(86) Numéro de dépôt international:
**PCT/FR2012/050874**

(87) Numéro de publication internationale:
**WO 2013/001189 (03.01.2013 Gazette 2013/01)**

(54) **PROCEDE D'OBTENTION D'UNE EMULSION COMPRENANT UNE PHASE INTERNE HYDROPHOBE DISPERSEE DANS UNE PHASE CONTINUE HYDROPHILE**

VERFAHREN ZUR HERSTELLUNG EINER EMULSION MIT EINER IN EINER KONTINUIERLICHEN HYDROPHILEN PHASE DISPERGIERTEN INNEREN HYDROPHOBEN PHASE

METHOD FOR OBTAINING AN EMULSION CONTAINING AN INTERNAL HYDROPHOBIC PHASE DISPERSED IN A CONTINUOUS HYDROPHILIC PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2011 FR 1153436**

(43) Date de publication de la demande:
**26.02.2014 Bulletin 2014/09**

(73) Titulaire: **Institut National de la Recherche Agronomique (INRA) 75007 Paris (FR)**

(72) Inventeurs:
  • **CAPRON, Isabelle**
    **F-44300 Nantes (FR)**
  • **CATHALA, Bernard**
    **F-44240 La Chapelle sur Erdre (FR)**
  • **BIZOT, Hervé**
    **F-44240 Suce-sur-Erdre (FR)**

(74) Mandataire: **Jacobacci Coralis Harle
14-16 Rue Ballu
75009 Paris (FR)**

(56) Documents cités:
**WO-A1-2009/013500    WO-A1-2010/058148**

• **OUGIYA H ET AL: "EMULSION-STABILIZING EFFECT OF BACTERIAL CELLULOSE", 1 janvier 1997 (1997-01-01), BIOSCIENCE BIOTECHNOLOGY BIOCHEMISTRY, JAPAN SOCIETY FOR BIOSCIENCE, BIOTECHNOLOGY, AND AGROCHEMISTRY, TOKYO, JAPAN, PAGE(S) 1541 - 1545, XP000876735, ISSN: 0916-8451 page 1541, colonne 1**
• **ANGELIKA MENNER ET AL: "Particle-Stabilized Surfactant-Free Medium Internal Phase Emulsions as Templates for Porous Nanocomposite Materials: poly-Pickering-Foams", LANGMUIR: THE ACS JOURNAL OF SURFACES AND COLLOIDS, AMERICAN CHEMICAL SOCIETY, WASHINGTON, DC, USA, vol. 23, no. 5, 27 février 2007 (2007-02-27), pages 2398-2403, XP002565251, ISSN: 0743-7463, DOI: 10.1021/LA062712U [extrait le 2007-01-10]**

**Description**

**DOMAINE DE L'INVENTION**

La présente invention se rapporte au domaine de la fabrication d'émulsions à phase interne élevée, dites à « moyenne phase interne » ou « haute phase interne », encore appelées émulsions de type « MIPE » ou « HIPE », ainsi qu'à leurs diverses applications industrielles, notamment pour la préparation de supports, de mousses ou de matériaux polymères.

**ART ANTERIEUR**

Une émulsion est un mélange, macroscopiquement homogène mais microscopiquement hétérogène, de deux substances liquides non miscibles.

Les deux substances liquides en présence sont appelées des phases. Une phase est continue ; l'autre phase discontinue interne est dispersée dans la première phase sous forme de gouttelettes.

Certaines émulsions particulières consistent en des systèmes dispersés immiscibles liquide/liquide dans lesquels le volume de la phase interne, encore appelée phase dispersée, occupe un volume supérieur à environ 50 pour cent du volume total de l'émulsion.

De telles émulsions à phase interne élevée consistent classiquement en des émulsions dites à « moyenne phase interne » ou « haute phase interne », encore appelées émulsions de type « MIPE » (pour « Médium Internal Phase Emulsions ») ou « HIPE » (pour « High Internal Phase Emulsions »).

Les émulsions à haute phase interne ou HIPE consistent en des systèmes dispersés immiscibles liquide/liquide dans lesquels le volume de la phase interne, encore appelée phase dispersée, occupe un volume supérieur à environ 74 - 75 pour cent du volume total de l'émulsion, c'est-à-dire un volume supérieur à ce qui est possible géométriquement pour l'empaquetage compact de sphères monodisperses.

On connaît des émulsions à haute phase interne du type eau-dans-huile et du type huile-dans-l'eau.

On peut utiliser chacun des deux types précités d'émulsion à haute phase interne pour la préparation de matériaux polymères poreux ou de particules polymères.

L'obtention d'émulsions HIPE du type eau-dans-huile et leur utilisation pour la fabrication de mousses polymères est par exemple décrite dans la demande PCT N° WO 2009/013500 ou dans la demande PCT N° WO 2010/058148.

L'obtention d'émulsions HIPE du type huile-dans-l'eau et leur utilisation pour la fabrication de mousses polymères est par exemple décrite dans le brevet N° US 6,218,440.

Ce brevet US 6,218,440 décrit notamment la préparation de microbilles hydrophiles selon un procédé qui comprend une étape d'obtention d'une émulsion HIPE du type huile-dans-l'eau, dont la phase continue aqueuse comprend un monomère hydrophile, puis une étape d'addition de l'émulsion HIPE obtenue à une suspension huileuse sous un courant d'azote. suivie d'une étape de polymérisation dudit monomère hydrophile en microbilles, avant précipitation et séchage des microbilles obtenues. Pour la formation d'une émulsion HIPE selon ce brevet américain, divers agents émulsifiants et divers agents stabilisants sont employés.

Les émulsions à moyenne phase interne ou MIPE consistent quant à elles en des systèmes dispersés immiscibles liquide/liquide dans lesquels le volume de la phase interne occupe un volume compris entre environ 50 et 74 - 75 pour cent du volume total de l'émulsion.

On peut également utiliser de telles émulsions à moyenne phase interne pour la préparation de matériaux polymères poreux ou de particules polymères.

L'obtention d'émulsions MIPE du type eau-dans-huile et leur utilisation pour la fabrication de mousses polymères est par exemple décrite dans la demande PCT N° WO 2010/058148 précitée.

L'article "Particle-Stabilized Surfactant-Free Médium Internal Phase Emulsions as Templates for Porous Nanocomposite Materials: poly-Pickering-Foams" (Langmuir, 2007, 23, 2398-2403) divulgue la stabilisation d'une émulsion de type MIPE par les nanotubes de carbone.

Néanmoins, il existe toujours un besoin dans l'état de la technique pour des procédés alternatifs ou améliorés d'obtention d'émulsions MIPE ou HIPE du type huile-dans-l'eau, pour diverses applications industrielles.

En particulier, il existe un besoin pour des émulsions à phase interne élevée qui soient stabilisés par des agents disponibles en grande quantité, biodégradables, non-toxiques, renouvelables, peu chères, de très faibles densités et facilement adaptables par modification de surface.

**RESUME DE L'INVENTION**

La présente invention est relative à un procédé d'obtention d'une émulsion huile-dans-l'eau à phase interne élevée, du type à moyenne phase interne (MIPE) ou à haute phase interne (HIPE), à partir d'une émulsion huile-dans

l'eau du type émulsion de Pickering stabilisée par des nanocristaux de cellulose.

En particulier, la présente invention est relative à un procédé d'obtention d'une émulsion comprenant une phase interne hydrophobe dispersée dans une phase continue hydrophile, du type à moyenne phase interne (MIPE) ou à haute phase interne (HIPE), possédant un pourcentage de phase interne supérieur à 55%, comprenant les étapes suivantes :

a) obtention d'une composition d'émulsion huile-dans-l'eau ayant un rapport volumique phase hydrophobe / phase hydrophile d'au moins 5/95, comprenant une étape d'incorporation de nanocristaux de cellulose dans ladite phase hydrophile, et une étape de formation de l'émulsion par dispersion de ladite phase hydrophobe dans ladite phase hydrophile, et

b) obtention d'une émulsion possédant un pourcentage de phase interne supérieur à 55%, comprenant :

b.1) une étape d'ajout d'un volume de phase hydrophobe à la composition d'émulsion obtenue à l'étape a), et agitation du mélange ainsi obtenu, et/ou
b.2) une étape de concentration de la composition d'émulsion obtenue à l'étape a), par retrait d'au moins une partie de ladite phase hydrophile.

A l'issue de l'étape b), l'émulsion formée est avantageusement du type à moyenne phase interne (MIPE) possédant un pourcentage de phase interne compris entre 55% et 75% ; de manière alternative, à l'issue de l'étape b), l'émulsion formée est avantageusement du type à haute phase interne (HIPE) possédant un pourcentage de phase interne supérieur à 75%.

A l'étape a), la composition d'émulsion a avantageusement un pourcentage de phase interne inférieur ou égal à 55%.

Dans certains modes de réalisation, l'émulsion préparée à l'étape b) comprend un rapport volumique phase interne hydrophobe / phase continue hydrophile d'au moins 60/40.

Selon encore une caractéristique particulière, à l'étape a), la composition d'émulsion a avantageusement un rapport volumique phase hydrophobe / phase hydrophile d'au plus 60/40.

Egalement selon une caractéristique particulière, l'émulsion préparée à l'étape b) comprend avantageusement un rapport volumique phase interne hydrophobe / phase continue hydrophile d'au moins 80/20.

Toujours selon une caractéristique particulière, la phase hydrophobe comprend avantageusement un liquide hydrophobe ou un mélange de liquides hydrophobes.

Dans ce cas, les liquides hydrophobes englobent avantageusement les alcanes choisis parmi les alcanes linéaires, les alcanes ramifiés, les alcanes cycliques et le mélange de deux au moins desdits alcanes, ledit alcane ayant un nombre d'atomes de carbone allant de 5 à 18 atomes de carbone.

L'alcane est de préférence choisi parmi l'hexadécane et le cyclohexane.

Encore dans ce cas, les liquides hydrophobes englobent avantageusement les huiles alimentaires, telles que l'huile de soja ou l'huile de tournesol.

Encore selon une caractéristique particulière, la phase hydrophile comprend avantageusement un monomère hydrophile, ou un mélange de monomères hydrophiles.

La présente invention concerne aussi une composition d'émulsion comprenant une phase interne hydrophobe dispersée dans une phase continue hydrophile, du type à moyenne phase interne (MIPE) ou à haute phase interne (HIPE), ladite composition comprenant des nanocristaux de cellulose localisés à l'interface entre la phase hydrophobe et la phase hydrophile, et ladite composition possédant un pourcentage de phase interne supérieur à 55%, de préférence entre 55% et 75% pour les MIPE ou supérieur à 75% pour les HIPE.

## DESCRIPTION DES FIGURES

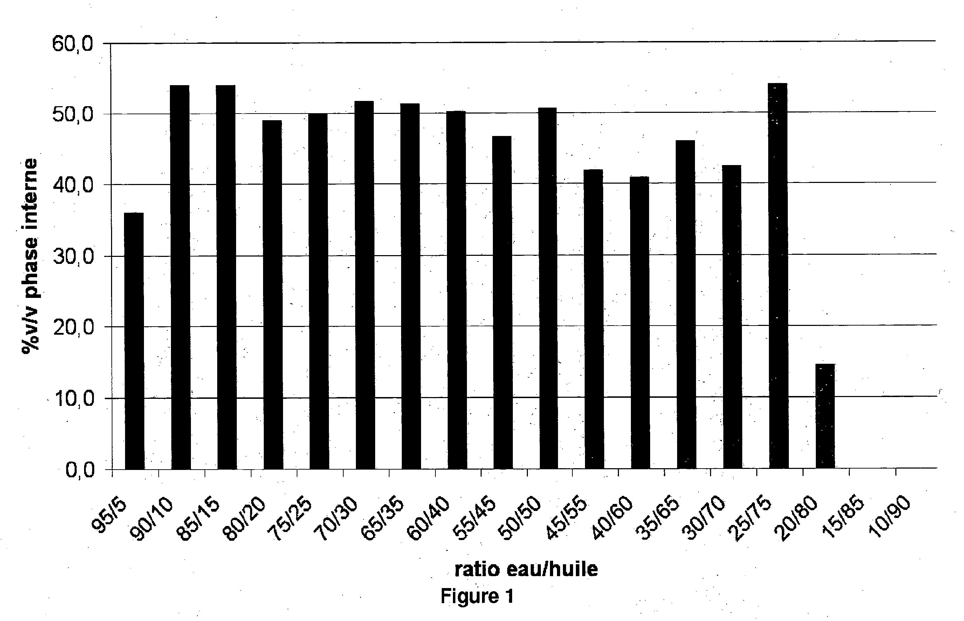

La **Figure 1** illustre les résultats de mesure du pourcentage de phase interne hydrophobe (pourcentage volumique de phase interne) pour une série de compositions d'émulsion stabilisée par des nanocristaux de cellulose, lesdites compositions étant préparées par dispersion de la phase hydrophobe avec des rapports phase hydrophile / phase hydrophobe' décroissants. En ordonnées : pourcentage du volume de la phase dispersée hydrophobe, par rapport au volume total de la composition d'émulsion. En abscisse : les valeurs du rapport volumique phase hydrophile / phase hydrophobe pour chaque composition d'émulsion testée.

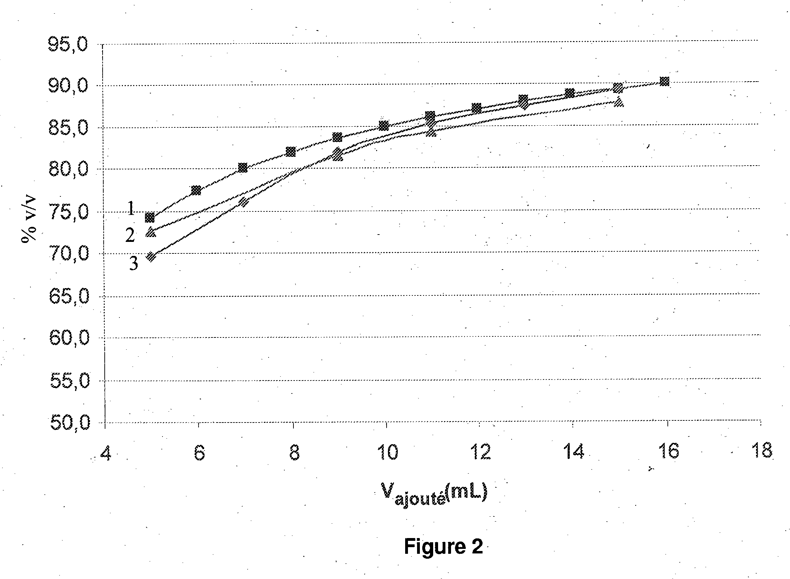

La **Figure 2** illustre, pour des émulsions HIPE préparées selon le procédé de l'invention, la variation du pourcentage volumique de phase dispersée hydrophobe dans l'émulsion (ou « pourcentage de phase interne ») en fonction du volume de phase hydrophobe ajouté, lorsque cette phase interne est exclusivement de l'hexadécane. Courbe 1 : courbe théorique. Courbe 2 : résultats expérimentaux avec une émulsion de Pickering à phase hydrophobe de cyclohexane. Courbe 3 : résultats expérimentaux avec une émulsion de Pickering à phase hydrophobe d'hexadécane. En abscisse : volume ajouté de phase hydrophobe hexadécane, exprimé en mL. En ordonnées : pourcentage volumique de phase dispersée hydrophobe (hexadécane) par rapport au volume total de la composition d'émulsion de type HIPE.

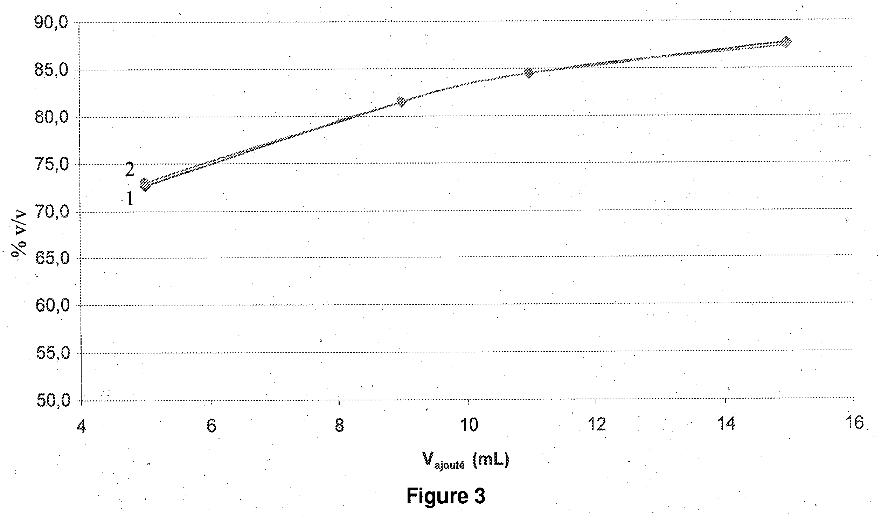

La **Figure 3** illustre, pour des émulsions HIPE préparées selon le procédé de l'invention, la variation du pourcentage volumique de phase dispersée hydrophobe dans l'émulsion (ou « pourcentage de phase interne ») en fonction du volume de phase hydrophobe ajouté. Courbe 1 : résultats expérimentaux avec une phase hydrophobe de cyclohexane. Courbe 2 : résultats expérimentaux avec une phase hydrophobe d'hexadécane. En abscisse : volume ajouté de phase hydrophobe, exprimé en mL. En ordonnées : pourcentage volumique de phase dispersée hydrophobe par rapport au volume total de la composition d'émulsion.

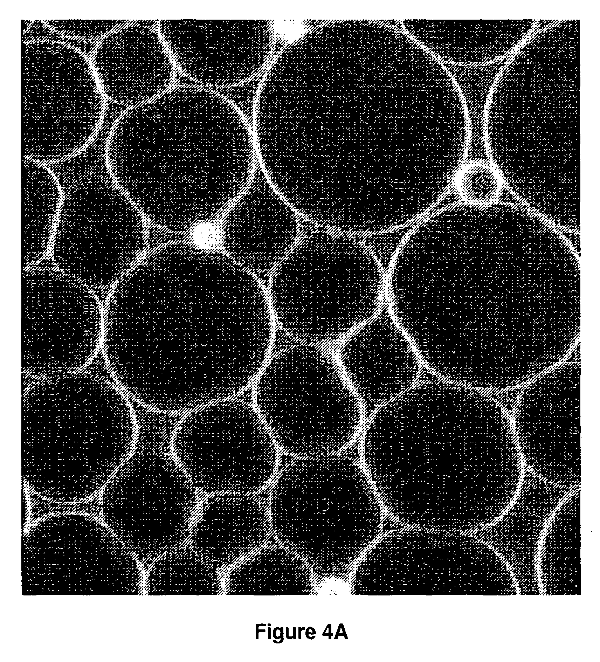

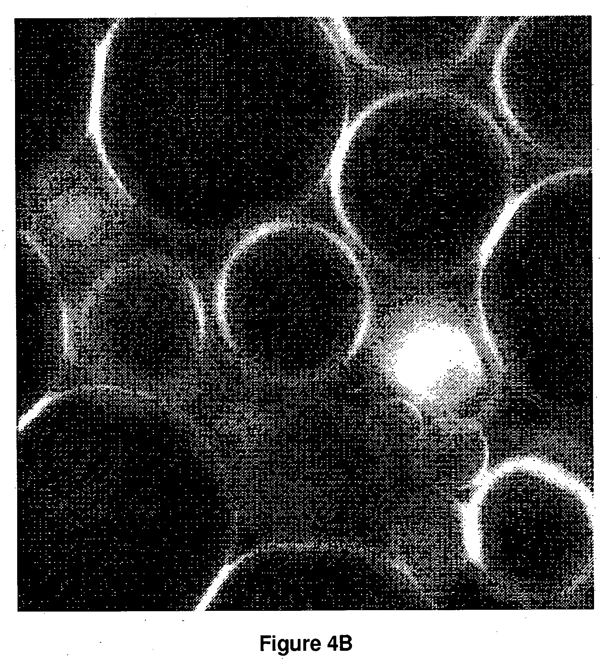

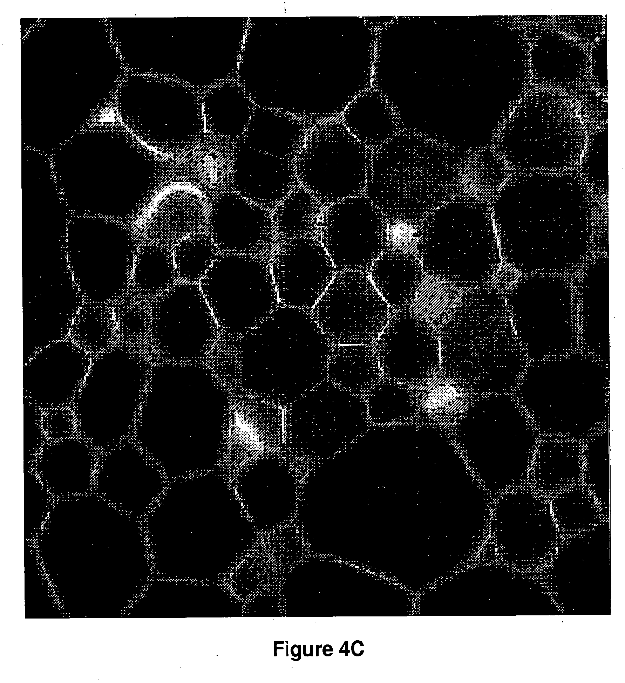

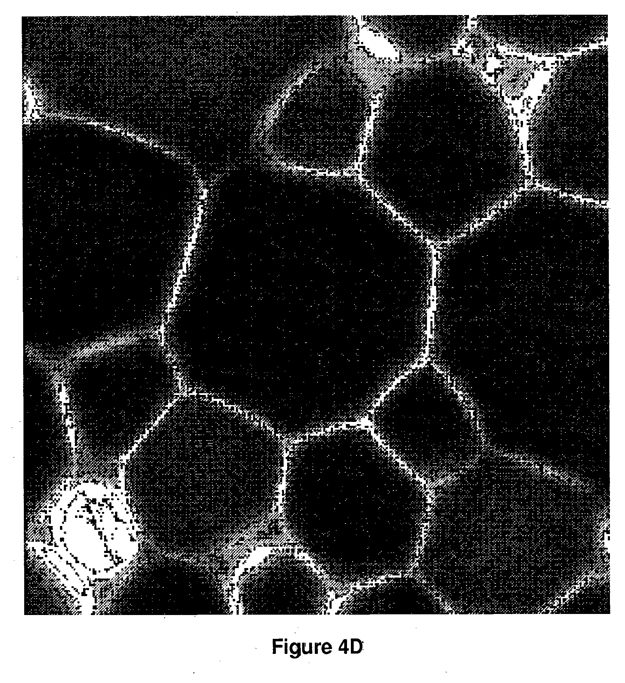

La **Figure 4** illustre des clichés de microscopie confocale à balayage laser (MCBL) de deux émulsions, respectivement (i) une émulsion huile-dans-l'eau stabilisée par des nanocristaux de cellulose utilisée comme produit de départ dans le procédé de l'invention, à deux grossissements distincts (figures 4A, 4B) et (ii) une émulsion HIPE huile-dans-l'eau selon l'invention ayant un pourcentage de phase interne de 80%, à deux grossissements distincts (figures 4C, 4D). Le signal de fluorescence est généré par le marqueur BODIPY (Marque déposée, 4,4-difluoro-4-bora-3a,4a-diaza-s-indacene) qui est localisé dans l'huile, proche de l'interface huile/eau. Il permet de délimiter l'interface phase interne hydrophobe / phase continue hydrophile et d'en suivre la déformation.

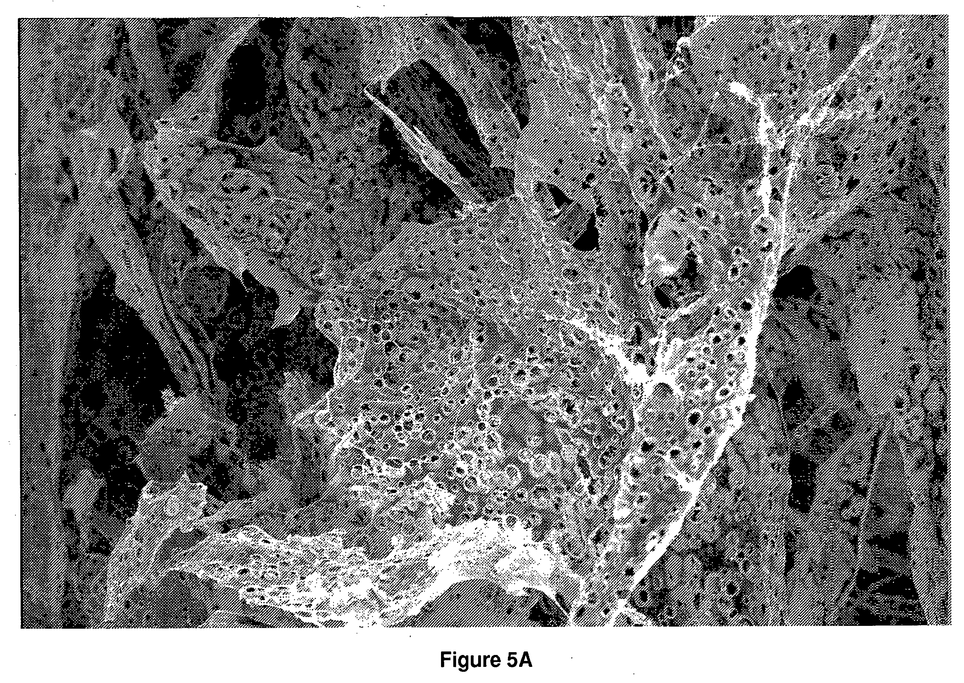

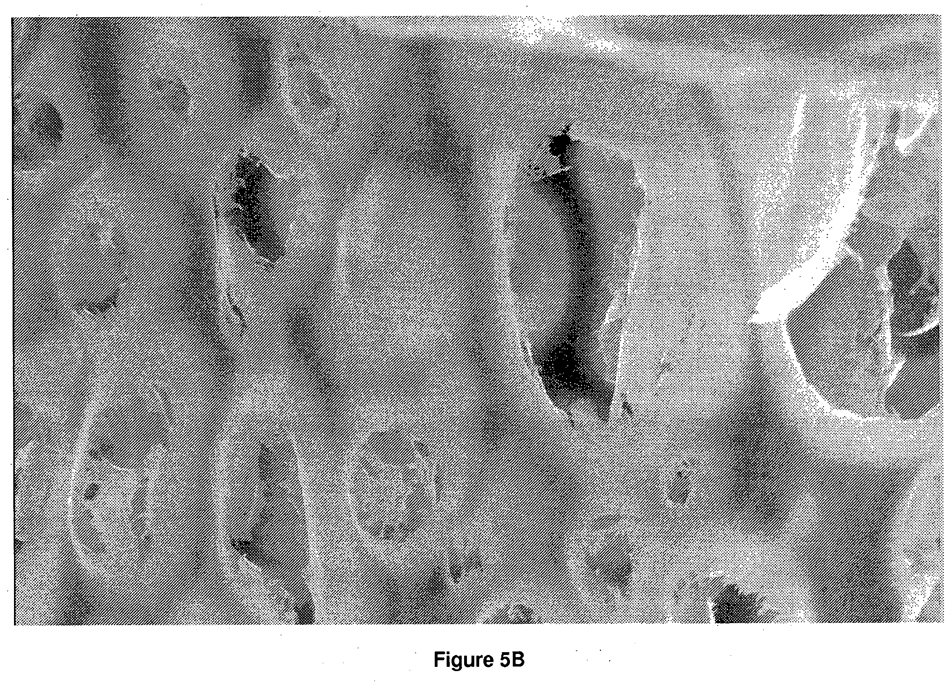

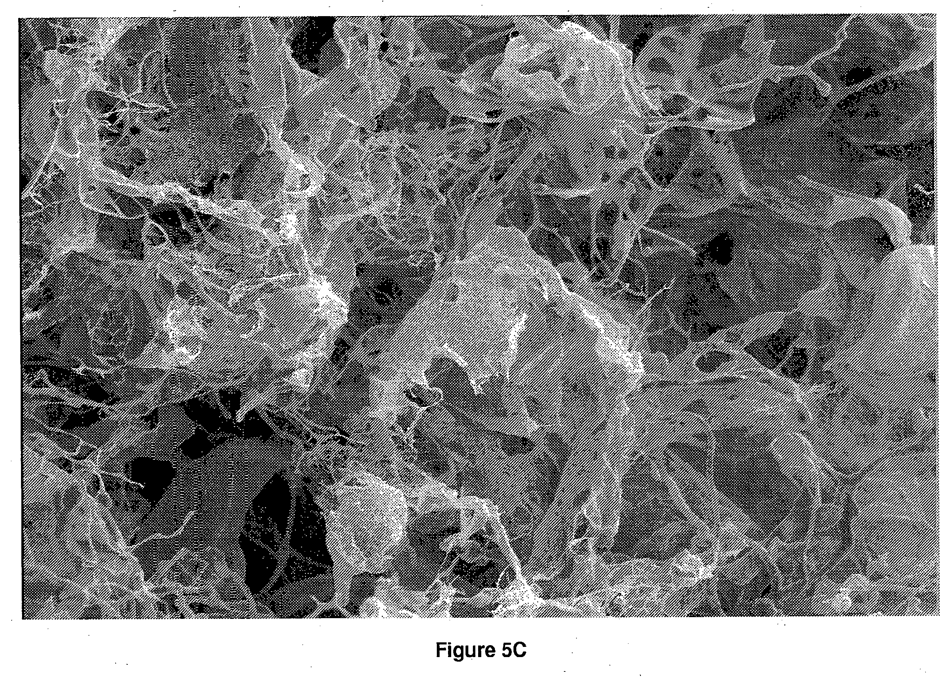

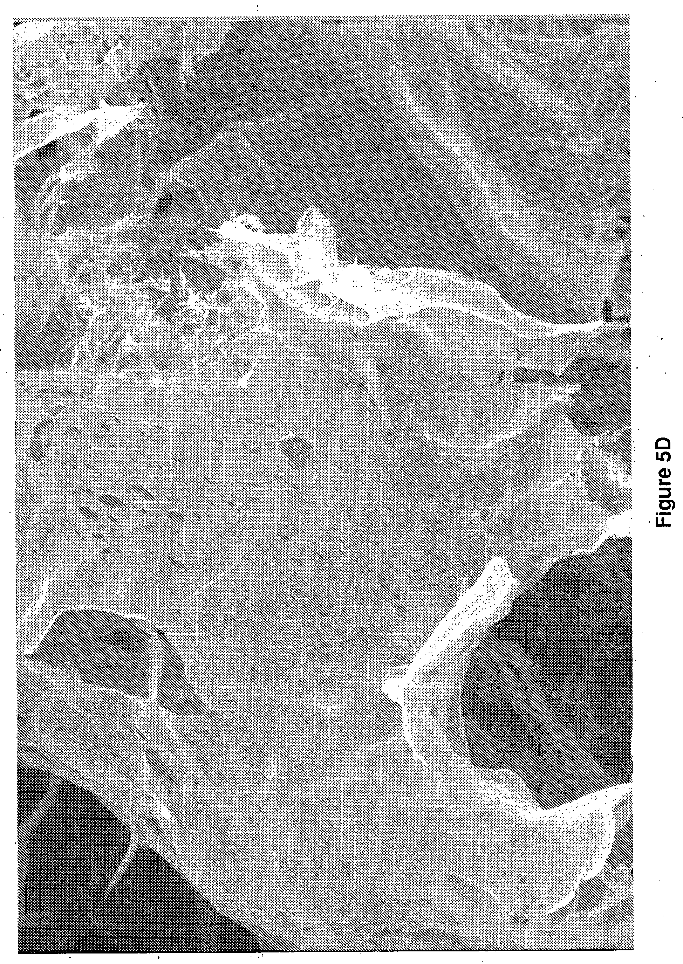

La **Figure 5** illustre des clichés de microscopie électronique à balayage (MEB) d'une mousse obtenue par lyophilisation (i) soit d'une émulsion de Pickering (Fig. 5A et 5B), (ii) soit d'une émulsion de type HIPE (Fig. 5C et 5D) selon l'invention avec une phase dispersée hydrophobe de cyclohexane ; Figure 5A : grossissement de x 430. Figure 5B : grossissement de x 6000. 5C : grossissement de x 1000. Figure 5D : grossissement de x 5500.

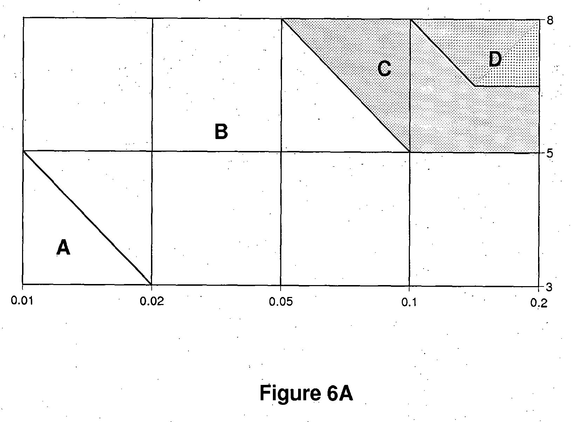

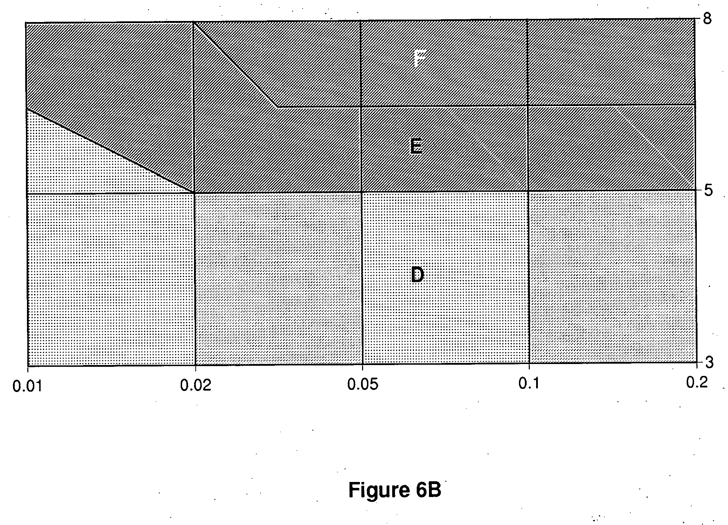

La **Figure 6** consiste en deux diagrammes de phase pour des émulsions de type HIPE stabilisées par des nanocristaux de coton à $0,16e/nm^2$ (Fig. 6A) et à $0,016e/nm^2$ (Fig. 6B), en fonction d'une variation de la concentration desdits nanocristaux dans la phase aqueuse et d'une variation de la salinité. En abscisse : molarité en NaCl, exprimé en M. En ordonnées : concentration en nanocristaux de cellulose exprimée en g/L.

A : une absence d'émulsion stable ; B :une émulsion en gel non structuré, puis un gel de plus en plus structuré : C : gel liquide ; D : gel visqueux ; E : gel visco-élastique ; F : gel solide.

## DESCRIPTION DETAILLEE DE L'INVENTION

La présente invention fournit un nouveau procédé de préparation de compositions d'émulsion à phase interne élevée, c'est-à-dire à moyenne phase interne (MIPE) ou à haute phase interne (HIPE).

Ces compositions comprennent une phase interne hydrophobe dispersée dans une phase continue hydrophile, c'est-à-dire des émulsions MIPE du type huile-dans-l'eau ou HIPE du type huile-dans-l'eau.

Une « émulsion à phase interne élevée » est un système dispersé immiscible liquide/liquide dans lequel le volume de la phase interne, encore appelée phase dispersée, occupe un volume supérieur à environ 50, de préférence à environ 55, pour cent du volume total de l'émulsion.

On rappelle qu'une émulsion à haute phase interne (HIPE) consiste en un système dispersé immiscible liquide/liquide dans lequel le volume de la phase interne, encore appelée phase dispersée, occupe un volume supérieur à environ 74-75 pour cent du volume total de l'émulsion, c'est-à-dire un volume supérieur à ce qui est possible géométriquement pour l'empaquetage compact de sphères monodisperses, c'est à dire d'une population de sphères de taille homogène.

On rappelle encore qu'une émulsion à moyenne phase interne (MIPE) consiste en un système dispersé immiscible liquide/liquide dans lequel la phase interne occupe un volume compris entre 50 et 74-75 pour cent du volume total de l'émulsion.

Selon l'invention, l'émulsion à moyenne phase interne (MIPE) consiste avantageusement en un système dispersé immiscible liquide/liquide dans lequel la phase interne occupe un volume compris entre 55 et 74-75 pour cent du volume total de l'émulsion.

En particulier, l'invention concerne un procédé d'obtention d'une émulsion HIPE huile-dans-eau comprenant une étape d'ajout d'un volume approprié de phase hydrophobe à une émulsion de Pickering huile-dans-l'eau stabilisée par des nanocristaux de cellulose.

L'invention a donc trait à un procédé d'obtention d'une émulsion MIPE ou HIPE huile-dans-l'eau, possédant un pourcentage de phase interne supérieur à 55%, comprenant les étapes suivantes :

a) obtention d'une composition d'émulsion huile-dans-l'eau ayant un rapport volumique phase hydrophobe / phase hydrophile d'au moins 5/95, comprenant une étape d'incorporation de nanocristaux de cellulose dans ladite phase hydrophile, et une étape de formation de l'émulsion par dispersion de ladite phase hydrophobe dans ladite phase hydrophile,
b) obtention d'une émulsion possédant un pourcentage de phase interne supérieur à 55%, comprenant :

b.1) une étape d'ajout d'un volume de phase hydrophobe à la composition d'émulsion obtenue à l'étape a), et agitation du mélange ainsi obtenu, et/ou
b.2) une étape de concentration de la composition d'émulsion obtenue à l'étape a), par retrait d'au moins une partie de ladite phase hydrophile.

Par « émulsion », on entend un mélange, macroscopiquement homogène mais microscopiquement hétérogène, de deux phases liquides non miscibles.

Dans une émulsion du genre « huile-dans-l'eau », au sens de l'invention, (i) la phase continue dispersante hydrophile consiste en une phase aqueuse et (ii) la phase interne dispersée est une phase hydrophobe.

Une émulsion huile-dans-l'eau peut être aussi désignée par le sigle « H/E » dans la présente description.

Dans la présente description les termes « phase huileuse » et « phase hydrophobe », peuvent être indifféremment utilisés pour désigner le liquide huileux utilisé pour la préparation d'une émulsion du genre huile-dans-l'eau.

Dans la présente description, les termes «phase aqueuse et « phase hydrophile » peuvent être indifféremment utilisés pour désigner le liquide aqueux utilisé pour la préparation d'une émulsion du genre huile-dans-l'eau.

Dans la présente description, les termes « phase interne », « phase interne hydrophobe », « phase dispersée », - « phase dispersée hydrophobe » peuvent être indifféremment utilisés pour désigner la phase huileuse dispersée d'une émulsion du genre huile-dans-l'eau.

Dans la présente description, les termes « phase continue », « phase continue hydrophile » et « phase continue aqueuse » peuvent être indifféremment utilisés pour désigner la phase aqueuse dispersante d'une émulsion huile-dans-l'eau.

Par « pourcentage de phase interne d'une composition d'émulsion, on entend selon l'invention le rapport entre (i) le volume de phase hydrophobe dispersée dans la phase continue hydrophile et (ii) le volume total de l'émulsion résultante, exprimé en pourcentage volumique.

Dans certaines situations, lorsqu' émulsion à phase interne élevée en particulier une émulsion de type HIPE est préparée conformément au procédé défini ci-dessus, on peut obtenir une phase d'émulsion comprenant la phase hydrophobe qui est dispersée dans la phase continue hydrophile sous forme d'émulsion, avec éventuellement (i) une phase huileuse constituée d'un volume de la phase hydrophobe qui est présente dans la composition sous une forme non dispersée (ce volume étant mesuré) et/ou (ii) une phase aqueuse (ne faisant pas partie de l'émulsion).

Le pourcentage de phase interne est calculé par (i) mesure du volume de la phase hydrophobe non dispersée, laquelle en général surmonte la phase d'émulsion, (ii) mesure du volume de la phase d'émulsion, puis (iii) calcul du volume de phase hydrophobe qui est sous forme dispersée dans la phase d'émulsion, étant entendu que le volume total de phase hydrophobe contenu dans la composition est connu.

Par «rapport volumique phase interne hydrophobe / phase continue hydrophile », notamment pour une émulsion de type MIPE ou HIPE, on entend selon l'invention le rapport entre (i) le volume de la phase hydrophobe intégré dans l'émulsion, et (ii) le volume de la phase hydrophile intégré dans l'émulsion.
Ce dernier rapport est uniquement indicatif, en ce sens qu'il est également fonction de la quantité de nanocristaux de cellulose intégrée dans l'émulsion. D'une manière générale, les essais ont été réalisés avec une phase hydrophile contenant des nanoparticules de cellulose en suspension à une concentration de 5g/L. Cette concentration n'est aucunement limitative ; la limite la plus fiable est avantageusement, sans n'être aucunement limitée, un taux de recouvrement de 60% lors de la fabrication de l'émulsion de Pickering. Si la condition de stabilité de l'émulsion de Pickering est remplie (étape a)), le procédé peut être poursuivi par l'ajout de la phase hydrophobe pour former l'émulsion à phase interne élevée en particulier l'émulsion HIPE (étape b)).

De manière surprenante, la demanderesse a montré que des émulsions MIPE ou HIPE du type huile-dans-l'eau possédant une haute teneur en phase dispersée hydrophobe, supérieure à 55% voire supérieure à 75% du volume total de l'émulsion, peuvent être obtenues à partir d'émulsions du type émulsion de Pickering stabilisées par des nanocristaux de cellulose.

Les émulsions du type émulsion de Pickering sont connues dans l'état de la technique. Les émulsions de Pickering sont des émulsions qui sont stabilisées par des particules en suspension colloïdale localisées à l'interface huile/eau.

En général, les émulsions de Pickering sont dépourvues d'agent tensio-actif conventionnel. Dans certains modes de réalisation, une émulsion de Pickering peut contenir un ou plusieurs agents tensio-actifs conventionnels, mais en quantité insuffisante pour stabiliser une émulsion.

Les compositions d'émulsion de Pickering stabilisées par des nanocristaux de cellulose qui sont utilisées comme produit de départ pour l'obtention des émulsions MIPE ou HIPE du genre huile-dans-l'eau divulguées dans la présente description, sont spécifiques à la présente invention, et leur procédé de préparation est spécifié en détail plus loin.

Plus précisément, la demanderesse a montré que, de manière surprenante, des émulsions MIPE, ou HIPE du type précité peuvent être obtenues lorsque l'on utilise comme composition de départ une émulsion huile-dans-l'eau de Pickering stabilisée par des nanocristaux de cellulose.

Notamment, on a montré selon l'invention que des émulsions HIPE sont obtenues car les compositions d'émulsion de Pickering stabilisées par des nanocristaux de cellulose permettent, lors de la réalisation de l'étape b) du procédé, de dépasser l'état d'empaquetage compact des gouttes de phase interne hydrophobe (aussi appelé état de « close packing »), c'est-à-dire d'obtenir un pourcentage de phase interne supérieur à 75%.

La présente invention concerne aussi un procédé d'obtention d'une émulsion comprenant une phase interne hydrophobe dispersée dans une phase continue hydrophile, du type à moyenne phase interne (MIPE) ou haute phase interne (HIPE), comprenant les étapes suivantes :

a) obtention d'une composition d'émulsion du type Pickering comprenant une phase hydrophobe et une phase hydrophile, avec un rapport volumique phase hydrophobe / phase hydrophile d'au moins 5/95, comprenant une étape d'incorporation de nanocristaux de cellulose dans ladite phase hydrophile, et une étape de formation de l'émulsion par dispersion de ladite phase hydrophobe dans ladite phase hydrophile,

b) obtention d'une émulsion possédant un pourcentage de phase interne supérieur à 55%, le cas échéant du type MIPE ou HIPE, comprenant :

b.1) une étape d'ajout d'un volume de phase hydrophobe à la composition d'émulsion obtenue à l'étape a), et agitation du mélange ainsi obtenu, et/ou

b.2) une étape de concentration de la composition d'émulsion obtenue à l'étape a), par retrait d'au moins une partie de ladite phase hydrophile.

A l'étape a) d'un procédé d'obtention d'une émulsion huile-dàns-l'eau du type Pickering selon l'invention, le rapport volumique phase hydrophobe / phase hydrophile est avantageusement d'au moins 5/95, et de préférence d'au plus 50/50, voir d'au plus 60/40.

Par « au moins 5/95 », on entend une valeur minimale de 5 pour la phase hydrophobe dans le rapport volumique.

Par « au plus 50/50 ou « au plus 60/40 », on entend la valeur maximale de 50 ou 60, respectivement, pour la phase hydrophobe dans le rapport volumique.

Dans ce cadre, le rapport volumique phase hydrophobe / phase hydrophile est avantageusement choisi parmi 5/95, 10/90, 15/85, 20/80, 25/75, 30/70, 35/65, 40/60, 45/55, 50/50, 55/45 ou 60/40.

Cette émulsion huile-dans-l'eau du type Pickering selon l'invention possède avantageusement un pourcentage de phase interne inférieur ou égal à 55%.

Selon un mode de réalisation, à l'étape b) d'un procédé d'obtention d'une émulsion huile-dans-l'eau du type HIPE selon l'invention, le volume de phase hydrophobe dispersé ajouté est additionné à l'émulsion précitée obtenue à l'étape a).

On a montré dans les exemples que le procédé d'obtention d'émulsions HIPE selon l'invention permet la préparation d'émulsions avec une haute teneur en phase interne hydrophobe, ayant jusqu'à plus de 95% en volume de phase interne hydrophobe, par rapport au volume total de l'émulsion.

On a aussi montré que des émulsions HIPE préparées selon le procédé de l'invention et ayant un rapport volumique phase interne hydrophobe / phase dispersée hydrophile supérieur à 78/22 peuvent se présenter sous la forme d'un gel.

On a montré dans les exemples que des compositions d'émulsion HIPE préparées par le procédé selon l'invention sont stables pendant une longue période de temps, y compris lorsqu'elles sont conservées à une température d'environ 20°C.

De plus, on a montré que des émulsions HIPE obtenues conformément au procédé de l'invention ont une excellente capacité de résistance à la compression. A titre illustratif, une émulsion HIPE selon l'invention ayant un pourcentage de phase interne de 85% n'est pas cassée lorsqu'on la soumet à une force centrifuge pouvant aller jusqu'à 10 000 g, voire jusqu'à 16 000 g.

Egalement, la demanderesse a montré la réversibilité de la rupture d'une émulsion HIPE selon l'invention, par exemple par cisaillement (p.ex. par agitation forte) ou compression (p. ex.. centrifugation forte). Une émulsion HIPE selon l'invention a donc la propriété de se reformer à nouveau après une rupture. A titre illustratif, on a montré qu'une émulsion HIPE selon l'invention ayant un pourcentage de phase interne de 75%, qui a été cassée par centrifugation ou agitation manuelle, peut être régénérée simplement par agitation, par exemple à l'aide d'un dispositif classique d'agitation, tel qu'un appareil connu du type rotor-stator, par exemple un dispositif connu sous le nom Ultraturrax™. On précise que la capacité d'une émulsion HIPE selon l'invention à être régénérée après rupture n'est pas influencée par le type des nanocristaux de cellulose qui est utilisé, et en particulier n'est pas influencée par le niveau d'hydrophilie / hydrophobicité desdits nanocristaux.

Par une étude des émulsions HIPE de l'invention par microscopie confocale à balayage, on a observé que les gouttes d'huile dispersées dans la phase continue aqueuse se déforment avec les rapports croissants phase interne hydrophobe / phase dispersée hydrophile, jusqu'à se conformer en polyèdres, ce qui minimise le volume occupé par la phase continue aqueuse.

On a aussi montré qu'une émulsion HIPE selon l'invention peut être soumise à un traitement pour réaliser une émulsion sèche, par exemple lorsque la phase interne hydrophobe est constituée d'une huile polymérisable ou non lyophilisable et qu'en conséquence seule la phase continue aqueuse est éliminée par séchage ou lyophilisation.

On a aussi montré qu'une émulsion HIPE selon l'invention peut être utilisée pour réaliser des mousses sèches, par exemple (i) soit par lyophilisation de ladite émulsion lorsque les 2 phases sont lyophilisables, ou (ii) soit, lorsque la phase dispersée hydrophobe comprend des monomères polymérisables, par polymérisation desdits monomères puis élimination de la phase continue aqueuse.

De manière générale, la demanderesse a montré que l'obtention d'une émulsion à phase interne élevée en particulier une émulsion HIPE stabilisée par des nanocristaux de cellulose est conditionnée par les caractéristiques de l'émulsion de Pickering qui est fournie pour sa préparation. Comme cela est décrit en détail ci-après, certaines caractéristiques de l'émulsion de Pickering de départ sont importantes pour l'obtention d'une émulsion HIPE selon l'invention, parmi lesquelles :

- la taille des nanocristaux de cellulose,
- la densité de charge des nanocristaux de cellulose,
- le taux de recouvrement par les nanocristaux de cellulose,
- le rapport volumique phase dispersée hydrophobe / phase continue hydrophile, et
- le cas échéant, la force ionique de la composition.

### *Fourniture d'une émulsion huile-dans-l'eau de Pickering stabilisée par des nanocristaux de cellulose.*

#### *Composition d'émulsion de Pickering*

**[0072]** - L'émulsion de Pickering utilisée pour l'obtention d'une émulsion MIPE ou HIPE selon l'invention consiste en une composition sous forme d'une émulsion comprenant une phase hydrophobe dispersée dans une phase aqueuse, et contenant des particules émulsifiantes (ou autrement dit « particules émulsionnantes ») consistant en des nanocristaux de cellulose.

Comme déjà précisé, l'émulsion de Pickering est du genre « huile dans eau ».

L'émulsion de Pickering est stabilisée par des nanocristaux de cellulose.

Les nanocristaux de cellulose sont connus de l'art antérieur, souvent sous la dénomination de « whiskers » de cellulose, ou de « nanowiskers » de cellulose.

De tels nanocristaux de cellulose peuvent être issus de diverses sources : végétale (e.g. pulpe de bois, coton ou algues), animale (e.g. tunicier), bactérienne ou cellulose régénérée. Ils sont par exemple décrits dans le document Samir et al. (2005, Biomacromolecules, Vol.6 : 612-626) ou dans le document Elazzouzi-Hafraoui et al. (Biomacromolecules. 2008;9(1):57-65).

Plus précisément, les nanocristaux de cellulose sont des particules solides hautement cristallines.

Ces nanocristaux de cellulose sont dépourvus, ou au moins pratiquement dépourvus, de partie amorphe. Ils présentent de préférence un taux de cristallinité d'au moins 60%, et de préférence compris entre 60% et 95% (voir par exemple Elazzouzi-Hafraoui et al., 2008 précité).

Avantageusement, les nanocristaux de cellulose ont une forme allongée, c'est-à-dire avantageusement un rapport longueur/largeur supérieur à 1.

Avantageusement, les nanocristaux de cellulose ont une forme aciculaire, c'est-à-dire une forme linéaire et pointue rappelant une aiguille. Cette morphologie peut être observée par exemple par microscopie électronique, en particulier par microscopie électronique en transmission (ou « MET »).

Avantageusement, les nanocristaux de cellulose comportent les caractéristiques dimensionnelles suivantes : (i) une longueur comprise entre 25 nm et 10 $\mu$m, et (ii) une largeur comprise entre 5 et 30 nm. Préférentiellement, les nanocristaux de cellulose ont une longueur inférieure à 1 $\mu$m.

Par « longueur », on entend la plus grande dimension des nanocristaux, séparant deux points situés aux extrémités de leur axe longitudinal respectif.

Par « largeur », on entend la dimension mesurée le long des nanocristaux, perpendiculairement à leur axe longitudinal respectif et correspondant à leur section maximale.

Dans des modes de réalisation préférés, les nanoparticules de cellulose forment une population relativement homogène de nanocristaux dont les valeurs expérimentales de longueur suivent une distribution Gaussienne centrée sur la valeur de longueur assignée pour ladite population de nanocristaux. Dans ces modes de réalisation préférés, on peut utiliser par exemple des nanocristaux de cellulose d'une « seule taille déterminée », comme cela est illustré dans les exemples..

En pratique, la morphologie et les dimensions des nanocristaux peuvent être déterminées en utilisant différentes techniques d'imagerie comme la microscopie électronique à transmission (MET) ou la microscopie à force atomique (AFM), la diffusion des rayons X ou des neutrons aux petits angles (respectivement SAXS pour « Small-Angle X-ray Scattering et SANS pour « Small-Angle Neutron Scattering ») ou encore la diffusion dynamique de la lumière (DDL).

Selon un mode préféré de réalisation, les nanocristaux de cellulose présentent les dimensions suivantes : (i), une longueur comprise entre 100 nm et 1 $\mu$m, et (ii) une largeur comprise entre 5 et 20 nm.

Avantageusement encore, les nanocristaux de cellulose ont un rapport longueur/largeur supérieur à 1 et inférieur à 100, de préférence compris entre 10 et 55.

Un rapport longueur/largeur supérieur à 1 et inférieur à 100 englobe les rapports longueur/largeur d'au moins 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 et 99.

Un rapport longueur/largeur compris entre 10 et 55 englobe les rapports longueur/largeur choisis parmi 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53 et 54.

Par exemple, les nanocristaux obtenus à partir de la cellulose de coton comportent avantageusement une longueur comprise entre 100 nm et 200 nm, pour une largeur comprise entre 12 et 15 nm.

Dans certains modes de réalisation des nanocristaux de cellulose, le rapport longueur/largeur est compris avantageusement entre 7 et 17.

Selon un autre exemple, les nanocristaux peuvent être obtenus à partir d'une cellulose bactérienne (connus sous l'appellation de « nanocristaux de cellulose bactérienne », « BCN » ou « BMCC »). De tels nanocristaux comportent avantageusement une longueur comprise entre 600 nm et 1 $\mu$m, pour une largeur comprise entre 12 et 17 nm.

Dans certains modes de réalisation des nanocristaux de cellulose, le rapport longueur/largeur est compris avantageusement entre 35 et 83.

Encore dans un autre mode de réalisation, les nanocristaux de cellulose pouvant être obtenus à partir de la cellulose de *Cladophora* comportent avantageusement une longueur comprise entre 3 et 5 $\mu$m (avantageusement de l'ordre de 4$\mu$m), pour une largeur de 20 +/- 5 nm. Le rapport longueur/largeur est compris avantageusement entre 150 et 250, de préférence de l'ordre de 160.

Pour optimiser la stabilité des émulsions de Pickering, les nanocristaux de cellulose sont avantageusement choisis en fonction de leurs caractéristiques de surface, tenant compte notamment de (i) l'aspect électrostatique et/ou (ii) de l'hydrophilicité.

Concernant l'aspect électrostatique de surface, les nanocristaux de cellulose stabilisant l'émulsion ont avantageusement une densité de charges de surface maximale de 0,67 e.nm$^{-2}$, notamment de 0,5 e.nm$^{-2}$ et en particulier une densité de charges de surface maximale de 0,3 e.nm$^{-2}$. On note que « e » correspond à une charge élémentaire.

La densité de charge en surface peut être éventuellement choisie en fonction de la force ionique de la phase aqueuse.

Avantageusement, cette densité de charge de surface est déterminée par dosage conductimétrique, par exemple comme décrit à l'exemple 1.

Plus précisément et selon un mode de réalisation, les nanocristaux de cellulose comportent une surface chargée, avec une densité de charges de surface comprise entre 0,01 e.nm$^{-2}$ et 0,31 e.nm$^{-2}$.

Comme cela est décrit dans les exemples, la densité désirée de charges de surface peut être obtenue par un contrôle du degré de sulfatation des nanocristaux. Le degré de sulfatation des nanocristaux peut être contrôlé en soumettant les nanocristaux de cellulose à un traitement de sulfatation et, si nécessaire, à un traitement subséquent de désulfatation.

La demanderesse a montré qu'une émulsion de Pickering stable est obtenue lorsqu'on utilise des nanocristaux de cellulose pratiquement non chargés.

La demanderesse a également montré qu'au-delà de 0,31 e.nm$^{-2}$, la stabilité de l'émulsion de Pickering est très significativement altérée. La demanderesse a montré que des nanocristaux de cellulose possédant une valeur de densité de charge trop grande présentent une surface trop hydrophile et sont retrouvés en grande quantité en suspension dans la phase aqueuse au lieu d'être localisés à l'interface huile/eau pour stabiliser l'émulsion.

Dans ce cas, les nanocristaux de cellulose comportent avantageusement des charges de surface négatives, qui sont avantageusement portées par des groupements anioniques en surface.

Les groupements anioniques des nanocristaux de cellulose sont choisis par exemple parmi les groupements sulfonate, les groupements carboxylate, les groupements phosphate, les groupements phosphonate et les groupements sulfate.

La transposition d'une valeur de degré de substitution (DS) à la valeur correspondante de densité de charges de surface (e.nm$^{-2}$) est directe, dès lors que le nombre de charges du groupement chimique considéré est connu. A titre illustratif, pour les groupements sulfate, qui portent une charge unique, la valeur de DS (nombre de groupes sulfate par unité de surface) est identique à la valeur de densité de charges de surface (nombre de charges par unité de surface identique).

En d'autres termes, les nanocristaux de cellulose ont un degré de substitution (DS) compris entre 10$^{-3}$ et 10$^{-2}$ e/nm$^2$, ou un degré de substitution en surface (DSs) compris entre DS/0,19 à DS/0,4, selon la morphologie des nanocristaux utilisés.

Selon un autre mode de réalisation, les nanocristaux de cellulose ont une surface neutre. Dans ce cas, la densité de charges de surface est avantageusement inférieure ou égale à 0,01 e.nm$^{-2}$.

De manière générale, des nanocristaux de cellulose utilisés selon l'invention sont des nanocristaux de cellulose qui n'ont pas subi de traitement d'hydrophobisation. Cela englobe les nanocristaux de cellulose dont les groupes hydroxyle n'ont pas été fonctionnalisés par des atomes ou des groupes hydrophobes. Typiquement, cela englobe les nanocristaux qui n'ont pas subi de traitement d'hydrophobisation par estérification de groupes hydroxyle par des acides organiques.

Dans des modes de réalisation avantageux, les nanocristaux de cellulose qui sont utilisés pour obtenir l'émulsion de Pickering ne subissent aucun traitement chimique postérieur à leur obtention, autre qu'un traitement de désulfatation ou de sulfatation. Notamment, on utilise préférentiellement des nanocristaux de cellulose qui n'ont pas été fonctionnalisés ou greffés avec des groupes permettant leur réticulation subséquente, par exemple par des groupes du type méthacrylate ou diméthacrylate. Egalement, on utilise préférentiellement des nanocristaux de cellulose qui n'ont pas été fonctionnalisés ou greffés par des molécules polymères, telles qu'un polyéthylène glycol, un poly(hydroxyester) ou encore un polystyrène.

La demanderesse a également montré que la stabilité de l'émulsion de Pickering peut être accrue en utilisant une phase aqueuse ayant une force ionique minimale déterminée.

Comme cela est montré dans les exemples avec des nanocristaux de cellulose, une stabilité optimale de l'émulsion est obtenue à partir d'un seuil minimal de valeur de force ionique de la phase aqueuse.

Comme cela est montré dans les exemples, une stabilité maximale de l'émulsion de Pickering est obtenue pour une valeur de force ionique correspondant à une concentration finale de NaCl de 0,02 M dans ladite émulsion.

Sans vouloir être lié par une quelconque théorie, le demandeur pense que la valeur seuil de force ionique de la phase aqueuse à partir de laquelle une stabilité optimale de l'émulsion est obtenue est celle pour laquelle les charges (contre-ions) présentes dans la phase aqueuse neutralisent les charges (ions) présentes sur les nanocristaux.

Comme cela est montré dans les exemples, la présence de contre-ions en excès n'influe pas significativement sur les propriétés de stabilité de l'émulsion. Pour un excès massif de contre-ions, qui n'a pas été atteint dans les conditions opératoires des exemples, on peut présager une variation des conditions du fait d'une précipitation des nanocristaux sans nécessairement altérer la stabilité de l'émulsion (le phénomène d'agrégation s'est avéré plutôt favorable pour la stabilisation de l'émulsion - voir figure 6).

A titre indicatif, selon un mode de réalisation particulier, pour une composition comportant une force ionique inférieure à la force ionique équivalente à 10 mM de NaCl, les nanocristaux de cellulose comportent avantageusement une densité de charges de surface maximale de 0,03 e.nm$^{-2}$.

Pour une composition comportant une force ionique supérieure à la force ionique équivalente à 10 mM de NaCl, la densité de charges de surface portée par les nanocristaux de cellulose semble ne plus être un paramètre pertinent pour la stabilisation effective de l'émulsion.

Une force ionique supérieure à la force ionique équivalente à 10 mM de NaCl inclut une force ionique supérieure à 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 210, 220, 230, 240, 250, 260, 270, 275, 280, 290, 300, 310, 315, 320, 325, 330, 335, 340, 345, 350, 360, 370, 375, 380, 390, 400, 410, 420, 430, 440, 450, 460, 470, 480, 490, ou supérieure à 500 mM de NaCl. De préférence, la force ionique est inférieure à une force ionique équivalent à 3 M de NaCl.

Les résultats des exemples montrent que, dans certains modes de réalisation d'une émulsion selon l'invention, la stabilité desdites émulsions est déjà maximale pour une force ionique de la composition de 20 mM NaCl, et le niveau de stabilité de l'émulsion étant maintenu pratiquement inchangé pour toutes les valeurs de force ionique testées, c'est-à-dire au moins jusqu'à une valeur de force ionique équivalent à la force ionique de 0,5 M de NaCl.

Les nanocristaux de cellulose sont généralement incorporés dans la phase aqueuse de la composition.

Selon un mode de réalisation préféré, la composition d'émulsion de Pickering est stabilisée uniquement par les nanocristaux de cellulose, sans ajout d'autre composé émulsifiant ou stabilisant.

Selon un mode de réalisation préféré, la composition d'émulsion de Pickering ne comprend aucune particule solide, que ladite particule solide soit non fonctionnalisée ou fonctionnalisée, autre que les nanocristaux de cellulose.

La composition comprend avantageusement de 0,035% à 2% en poids, de préférence encore de 0,05% à 1% en poids, de nanocristaux de cellulose par rapport au poids total de ladite composition.

Cette proportion massique en nanocristaux de cellulose peut être évaluée par exemple par extrait sec de la phase aqueuse ou par dosage des sucres après hydrolyse.

On a montré selon l'invention qu'une quantité de nanocristaux de cellulose suffisante pour l'obtention d'un taux de recouvrement d'au moins 40% (par exemple pour les nanocristaux de cellulose de *Cladophora),* de préférence encore 60% (par exemple pour les nanocristaux de cellulose bactérienne - BCN), en fonction du type de nanocristaux mis en oeuvre, est requise pour la préparation d'une composition d'émulsion de Pickering qui est adaptée à l'obtention d'une composition d'émulsion MIPE ou HIPE finale selon l'invention.

Le demandeur a observé qu'on ne peut former d'émulsion de Pickering stable lorsque la quantité de nanocristaux de cellulose est inférieure à celle qui permet un taux de recouvrement d'environ 40%, de préférence encore d'environ 60%. En particulier, lorsqu'on utilise une masse de nanoparticules trop faible par rapport au volume d'huile, il se produit une coalescence des gouttelettes de la phase hydrophobe de manière à tendre vers un recouvrement minimum de 40%, de préférence de 60%. La faible stabilité de l'émulsion de Pickering résultante ne permet pas l'obtention subséquente de l'émulsion MIPE ou HIPE selon l'invention, au moins dans des conditions satisfaisantes. En particulier, le demandeur a observé qu'il était impossible d'obtenir une émulsion de Pickering stable avec un taux de recouvrement de nanocristaux de cellulose, inférieur à 40%, de préférence inférieur à 60% ; il est ainsi impossible d'obtenir une émulsion MIPE ou HIPE.

Au sens de la présente description, le « taux de recouvrement » par des nanocristaux de cellulose représente la proportion de la surface des gouttelettes de phase hydrophobe dispersées dans la phase aqueuse, à l'interface huile/eau, qui est recouverte par les nanocristaux de cellulose.

Le taux de recouvrement « C », qui est le rapport entre (i) la surface de nanocristaux de cellulose présents dans la composition d'émulsion susceptible de se stabiliser à l'interface phase interne hydrophobe/phase continue hydrophile et (ii) la surface totale des gouttelettes de phase hydrophobe dans ladite composition d'émulsion, est calculé selon la formule (I) suivante :

$$C = S_p / S_d \ (I),$$

dans laquelle :

- $S_p$ représente la surface de nanocristaux de cellulose susceptible de se stabiliser à l'interface présents dans la composition d'émulsion, et
- $S_d$ représente la surface totale des gouttelettes de phase hydrophobe dans la composition d'émulsion.

La surface des nanocristaux est assimilée à une surface à un seul plan, en prenant l'hypothèse que les nanocristaux sont alignés sur ladite surface en un ruban plat.

En conséquence, la valeur de surface des nanocristaux peut être calculée selon la formule (II) suivante :

$$S_p = N_p L l = \frac{m_p}{h \rho_p} \ (II),$$

avec : $N_p = \frac{m_p}{V_p \times \rho_p} = \frac{m_p}{L \times l \times h \times \rho_p}$ dans laquelle :

- $S_p$ représente la surface de nanocristaux de cellulose susceptible de se stabiliser à l'interface présents dans la composition d'émulsion,
- $N_p$ signifie le nombre de nanocristaux de cellulose présentes dans la phase aqueuse,
- L signifie la longueur des nanocristaux de cellulose,
- l signifie la largeur des nanocristaux de cellulose
- h signifie la hauteur des nanocristaux de cellulose
- $m_p$ signifie la masse de nanocristaux de cellulose, et
- p signifie la densité des nanocristaux de cellulose

La surface des gouttelettes est la surface à l'interface huile/eau, qui a été calculée pour chaque diamètre moyen de gouttelettes selon D(3,2).

En conséquence, la valeur de surface des gouttelettes peut être calculée selon la formule (III) suivante :

$$S_d = 4\pi R^2 \times Ng = 4\pi R^2 \times \frac{3V_{oil}}{4\pi R^3} = \frac{3V_{oil}}{R} \quad (III),$$

avec :

$$N_g = \frac{V_{oil}}{4/3\,\pi R^3} \quad (IV)$$

dans laquelle :

- Ng signifie le nombre de gouttes présentes dans l'émulsion
- $S_d$ signifie la valeur de surface des gouttelettes de phase hydrophobe,
- R signifie le rayon moyen des gouttelettes, et
- $V_{oil}$ signifie le volume total de la phase interne hydrophobe.

La valeur finale du taux de recouvrement « C » est calculée selon la formule (I) déjà mentionnée ci-dessus :

$$C = Sp / Sd \ (I),$$

dans laquelle :

- Sp représente la surface de nanocristaux de cellulose susceptible de se stabiliser à l'interface et présents dans la composition d'émulsion,
- $S_d$ représente la surface totale des gouttelettes de phase hydrophobe dans la composition d'émulsion.

Dans la composition d'émulsion de Pickering, la phase dispersée hydrophobe représente avantageusement moins de 50% en volume par rapport au volume total de la composition.

La phase hydrophobe est choisie parmi les huiles végétales, les huiles animales, les huiles minérales, les huiles de synthèse, les solvants organiques hydrophobes et les polymères liquides hydrophobes.

La composition d'émulsion de Pickering peut contenir encore tout autre composé approprié à son utilisation ou destination finale.

La composition d'émulsion de Pickering peut ainsi être adaptée à l'application recherchée pour la composition HIPE finale, l'application pouvant notamment être choisie parmi les compositions utilisables dans les domaines alimentaires, cosmétiques, pharmaceutiques, ou encore phytosanitaires.

De façon connue et en fonction de l'application recherchée pour la composition d'émulsion MIPE ou HIPE finale selon l'invention, la composition d'émulsion de Pickering peut contenir par exemple, sans être aucunement limitatif, des principes actifs et des adjuvants tels que des conservateurs, des gélifiants, des solvants, des matières colorantes, etc.

*Procédé d'obtention de la composition d'émulsion de Pickering*

Le procédé pour la fabrication de la composition d'émulsion de Pickering, comprend avantageusement les étapes suivantes :

(a) la fourniture de nanocristaux de cellulose tels que définis ci-dessus, puis
(b) l'incorporation desdits nanocristaux de cellulose dans la phase aqueuse de ladite composition, dans une quantité massique apte à générer un taux de recouvrement d'au moins 60% dans ladite émulsion de Pickering et à stabiliser ladite émulsion.

Les étapes générales pour la fabrication de l'émulsion peuvent être réalisées.selon des procédures classiques, notamment employées pour la fabrication d'une émulsion de Pickering.

En particulier, l'étape d'incorporation des nanocristaux de cellulose dans la phase aqueuse correspond aux étapes mises en oeuvre pour l'incorporation de particules colloïdales lors de la fabrication d'émulsions de Pickering.

De manière générale, une émulsion de Pickering, qui est obtenue ou fournie à l'étape a) du procédé d'obtention d'une émulsion HIPE selon l'invention, est préparée selon un procédé comprenant les étapes suivarites :

1) fournir les volumes appropriés respectivement de la phase hydrophile et de la phase hydrophobe,

2) disperser la phase hydrophobe dans la phase hydrophile.

L'une ou l'autre des phases hydrophile ou hydrophobe comprend la quantité appropriée de nanocristaux de cellulose.

De préférence, du fait que les nanocristaux de cellulose qui sont utilisés sont hydrophiles, ou tout au moins ne sont pas hydrophobes, lesdits nanocristaux de cellulose sont présents dans la phase hydrophile.

L'étape 2) de dispersion de la phase hydrophobe dans la phase hydrophile peut être réalisée par toute technique de réalisation d'une émulsion connue par l'homme du métier.

On peut ainsi par exemple employer une technique d'obtention d'émulsion par ultrasons, comme cela est réalisé de manière conventionnelle. On peut aussi employer une technique d'obtention d'émulsion par agitation à l'aide d'un dispositif disperseur homogénéiseur du type rotor-stator, par exemple un dispositif rotor-stator connu sous le nom de Ultraturrax™, bien connu par l'homme du métier.

A titre illustratif, on peut obtenir une émulsion de Pickering stabilisée par des nanocristaux de cellulose, produit de départ du procédé d'obtention d'une émulsion MIPE ou HIPE selon l'invention, en soumettant un mélange (i) phase hydrophile / (ii) phase hydrophobe, ledit mélange comprenant la quantité appropriée de nanocristaux de cellulose, à une étape d'homogénéisation par ultrasons pendant une durée de quelques secondes à quelques minutes selon la puissance du dispositif et le volume d'émulsion.

Egalement à titre illustratif, on peut obtenir une émulsion de Pickering stabilisée par des nanocristaux de cellulose, produit de départ du procédé d'obtention d'une émulsion HIPE selon l'invention, en soumettant un mélange (i) phase hydrophile / (ii) phase hydrophobe, ledit mélange comprenant la quantité appropriée de nanocristaux de cellulose, à une étape d'homogénéisation à l'aide d'un dispositif rotor / stator du type Heidolph (Roth - Marque déposée) à une vitesse d'au moins 40000 tr/min (rpm) pendant une durée de 1 à 3 minutes.

Les nanocristaux de cellulose fournis à l'étape a) du procédé d'obtention d'une émulsion MIPE ou HIPE selon l'invention sont avantageusement obtenus par un procédé de fabrication à partir d'une cellulose.

La cellulose est choisie avantageusement parmi l'une au moins des celluloses d'origine suivante : végétale, animale, bactérienne, algale ou régénérée à partir d'une cellulose transformée de sources commerciales.

La principale source de cellulose est la fibre végétale. La cellulose y est présente comme composante de la paroi cellulaire, sous forme de faisceaux de micro-fibrilles.

Une partie de ces micro-fibrilles est composée de cellulose dite « amorphe », alors qu'une seconde partie est constituée de cellulose dite « cristalline ».

Les nanocristaux de cellulose sont avantageusement issus de la cellulose cristalline isolée à partir des fibres végétales, par élimination de la partie amorphe de cellulose.

Parmi les sources végétales, on peut citer par exemple le coton, le bouleau, le chanvre, la ramie, le lin, l'épicéa.

Parmi les sources algales de cellulose, on peut citer par exemple Valonia ou Chladophora (ou *Cladophora).*

Parmi les sources bactériennes de cellulose, on peut citer Gluconoacetobacter xylinus qui produit du Nata de coco par incubation directement dans du lait de noix de coco.

Parmi les sources animales de cellulose, on peut citer par exemple le tunicier.

La cellulose peut également être régénérée à partir d'une cellulose transformée de sources commerciales, notamment sous forme de papier.

On peut citer par exemple du papier de filtration Whatman (marque déposée) pour l'obtention de cellulose de coton.

A partir de la matière première cellulosique choisie, les nanocristaux de cellulose sont préparés par un procédé avantageusement choisi parmi l'un des procédés suivants : fractionnement mécanique, hydrolyse chimique ménagée, et dissolution/recristallisation

Par « fractionnement mécanique », on entend une opération classique d'homogénéisation haute pression.

Par « hydrolyse chimique ménagée », on entend un traitement par un composé chimique acide de la cellulose, dans des conditions assurant l'élimination de sa partie amorphe.

Le composé chimique acide est avantageusement choisi parmi l'acide sulfurique ou l'acide chlorhydrique.

Tel que décrit dans les exemples ci-après, selon le type d'acide, la température et le temps d'hydrolyse, la charge de surface peut être modulée.

Ainsi, une hydrolyse par l'acide chlorhydrique conduira à un état de surface quasiment neutre, alors qu'une hydrolyse par l'acide sulfurique introduira des charges sulfates (groupement $SO_3^-$) à la surface des nanocristaux de cellulose.

De tels traitements de type « hydrolyse chimique ménagée » sont par exemple décrits dans le document Elazzouzi-Hafraoui et al. (2008) précité ou dans le document Eichhorn S.J. et al (« Review : current international research into cellulose nanofibres and nanocomposites ». J Mater Sci 2010,45, 1-33).

Par « dissolution/recristallisation », on entend un traitement par un solvant, par exemple acide phosphorique,

uréé/NaOH, liquides ioniques, etc., suivi d'une recristallisation. Un tel procédé est par exemple décrit dans le document Helbert et al. (Cellulose. 1998, 5, 113-122).

Avant leur intégration dans la composition, les nanocristaux de cellulose obtenus sont avantageusement soumis à un procédé de post-modification, à l'issue duquel leur densité de charges de surface et/ou leur hydrophilicité sont modifiées, à condition que la post-modification ne génère pas de nanocristaux de cellulose hydrophobes.

Cette post-modification vise à optimiser les caractéristiques de surface des nanocristaux de cellulose, notamment en fonction de l'émulsion dans laquelle ils sont introduits, de manière à optimiser sa stabilisation.

Pour modifier la densité de charges de surface, le procédé de post-modification consiste avantageusement en un procédé d'introduction ou d'hydrolyse de groupements en surface portant lesdites charges de surface.

Dans ce cas, l'opération de post-modification comprend une étape d'introduction ou d'hydrolyse de groupements de surface choisis parmi les groupements sulfonate, carboxylate, phosphate, phosphonate et sulfate.

A titre indicatif, pour l'introduction des groupements de surface respectifs, on peut mettre en oeuvre un procédé tel que décrit dans le document Habibi Y et al. « TEMPO-mediated surface oxidation of cellulose whiskers », Cellulose, 2006, 13 (6), 679-687.

Encore à titre indicatif et à l'inverse, pour hydrolyse de tels groupements de surface, on peut mettre en oeuvre un traitement acide tel que décrit ci-après dans la partie Exemples ou un traitement mécanique de type sonication.

Dans ce cadre et selon un premier mode de réalisation, le procédé de fabrication consiste en un procédé d'hydrolyse acide ménagée de la cellulose par l'acide sulfurique, pour obtenir des nanocristaux de cellulose munis de groupements sulfate en surface. Selon ce mode de réalisation, le procédé de post-modification de nanocristaux de cellulose portant des groupes sulfate en surface consiste préférentiellement en un procédé d'hydrolyse contrôlée desdits groupements sulfate, à savoir par exemple par un traitement acide (choisi par exemple parmi l'acide chlorhydrique ou l'acide trifluoroacétique) pendant une durée adaptée au degré d'hydrolyse recherché.

Selon un second mode de réalisation, le procédé de fabrication consiste en un procédé d'hydrolyse acide ménagée de la cellulose par l'acide chlorhydrique. Selon ce mode de réalisation, le procédé de post-modification optionnel consiste en un procédé de post-sulfatation desdits nanocristaux de cellulose. Une telle post-sulfatation est avantageusement mise en oeuvre par un traitement acide des nanocristaux à l'acide sulfurique.

La composition d'émulsion de Pickering décrite ci-dessus est utilisée pour l'obtention de l'émulsion du type à moyenne phase interne (MIPE) ou à haute phase interne (HIPE) selon l'invention, comme cela est décrit ci-après.

### Obtention de l'émulsion du type à moyenne phase interne (MIPE) ou à haute phase interne (HIPE)

Si la condition de stabilité de l'émulsion de Pickering est remplie (étape a)), le procédé peut être poursuivi par la ou les étapes pour former l'émulsion MIPE ou HIPE (étape b)).

Selon l'invention, l'obtention de l'émulsion MIPE peut être obtenue :

- par ajout d'un volume de phase hydrophobe à la composition d'émulsion obtenue à l'étape a), et/ou
- par concentration de la composition d'émulsion obtenue à l'étape a), par retrait d'au moins une partie de ladite phase hydrophile.

Les Exemples ci-après montrent que ces émulsions MIPE présentent un pourcentage de phase interne compris entre 55% et 74-75%, sans rupture de l'émulsion (coalescence).

Encore selon l'invention, l'obtention de l'émulsion HIPE nécessite d'atteindre une concentration en gouttes hydrophobes dépassant le seuil de « close packing », ou encombrement maximum théorique de sphères de taille identique, correspondant à un pourcentage de phase interne supérieur à 74-75%.

A cet égard, sans être limitatif, deux voies sont envisageables :

- une taille variable de gouttelettes de la phase interne, et
- un gonflement des gouttelettes de la phase interne, puis leurs déformations.

Les Exemples ci-après montrent que l'émulsion de Pickering selon l'invention permet l'obtention d'émulsion HIPE d'intérêt, dont le pourcentage de phase interne est supérieur à 74-75%.

### Ajout d'un volume dephase hydrophobe

Selon un premier mode de réalisation, le procédé peut être poursuivi par l'ajout de la phase hydrophobe pour former l'émulsion MIPE ou HIPE (étape b.1.)).

Pour l'obtention de l'émulsion MIPE ou HIPE selon l'invention, à partir d'une émulsion de Pickering préparée comme décrit ci-dessus, on ajoute avantageusement une quantité désirée de phase hydrophobe à ladite émulsion avant de réaliser une agitation du mélange émulsion de Pickering / phase hydrophobe ajoutée.

De manière surprenante, le demandeur a montré que la réalisation d'une simple agitation avec un dispositif homogénéiseur (p. ex. Ultraturrax™) du mélange émulsion de Pickering / phase hydrophobe ajoutée permet l'obtention directe d'une émulsion MIPE ou HIPE.

Comme cela est montré dans les exemples, dans une émulsion MIPE ou HIPE selon l'invention, la valeur du rapport volume de phase dispersée hydrophobe / volume d'émulsion (et donc également la valeur du rapport volume de phase dispersée hydrophobe / volume de phase continue hydrophile) dépend directement du volume de phase hydrophobe ajoutée à l'émulsion de Pickering de départ.

Comme cela est également montré dans les exemples, il ne semble pas exister de limite spécifique à la valeur du rapport volumique phase dispersée hydrophobe / phase continue aqueuse dans l'émulsion HIPE ainsi obtenue.

Dans une émulsion MIPE ou HIPE selon l'invention, la valeur du rapport volumique de phase dispersée hydrophobe / émulsion est déterminable à l'avance, en fonction du volume de phase hydrophobe ajouté à l'émulsion de Pickering de départ.

A titre illustratif, une émulsion HIPE selon l'invention ayant un pourcentage de phase interne de 90% a pu être obtenue en ajoutant 16mL de phase hydrophobe à 2 mL de phase aqueuse correspondant à une suspension à 5g/L en nanocristaux de cellulose. Cette émulsion HIPE peut donc stabiliser la phase hydrophobe avec 1,8mg de particules de cellulose.

De la même manière, un calcul théorique permet de dire qu'une émulsion HIPE selon l'invention ayant un pourcentage de phase interne de 98% peut être obtenu en ajoutant 100 mL de phase hydrophobe à 2 mL l'émulsion de Pickering stabilisée par les nanocristaux de cellulose.

L'étape d'agitation du mélange émulsion de Pickering / phase hydrophobe ajoutée peut être réalisée aisément à l'aide d'un dispositif homogénéiseur / disperseur conventionnel, par exemple un dispositif d'agitation du type Ultraturrax™.

A titre illustratif, lorsqu'on utilise un dispositif d'agitation du type Ultraturrax™, l'émulsion HIPE peut être obtenue en agitant pendant une durée d'au moins 30 secondes à une vitesse de rotation d'au moins 1000 tours par minute, de préférence au moins 5000 tours par minute.

L'homme du métier adapte les conditions de l'étape d'agitation du mélange sur la base des indications de la présente description et de ses connaissances générales dans le domaine de la fabrication de compositions d'émulsion ;

Pour l'étape d'agitation du mélange, une durée d'au moins 30 secondes englobe les durées d'au moins 35, 40, 45, 50, 55, 60, 65, 70, 75, 80, 90, 95, 100, 1105, 110, 115, 120, 125, 130, 135, 140, 145, 150, 155, 160, 165, 170, 175, 180, 185, 190, 195 et 200 secondes.

Le cas échéant, l'étape d'agitation peut avoir une durée supérieure à 200 secondes, bien que cela ne soit pas utile pour l'obtention de l'émulsion HIPE finale.

Pour l'étape d'agitation, une force d'agitation d'au moins 1000 tours par minute englobe les forces d'agitation d'au moins 1050, 1100, 1150, 1200, 1250, 1300, 1350, 1400, 1450, 1500, 1550, 1600, 1650, 1700, 1750, 1800, 1850, 1900, 2000, 2100, 2200, 2300, 2400, 2500, 2600, 2700, 2800, 2900, 3000, 3100, 3200, 3300, 3400, 3500, 4000, 4100, 4200, 4300, 4400, 4500, 4600, 4700, 4800, 4900, 5000, 5100, 5200, 5300, 5400, 5500, 5600, 5700, 5800, 5900, 6000, 6100, 6200, 6300, 6400, 6500, 6600, 6700, 6800, 6900, 7000, 7100, 7200, 7300, 7400, 7500,7600, 7700, 7800, 7900, 80000, 8100, 8200, 8300, 8400, 8500, 8600, 8700, 8800, 8900, 9000, ou d'au moins 10000 tours par minutes.

Le cas échéant, une force d'agitation supérieure à 15000 tours par minute peut être appliquée, bien que cela ne soit pas utile pour l'obtention de l'émulsion HIPE finale.

De préférence, dans les conditions générales d'agitation définies ci-dessus, la force d'agitation est inférieure à 200000 tours par minute, afin d'éviter d'altérer la structure de l'émulsion. La force d'agitation peut être aisément adaptée par l'homme du métier à la lumière du contenu de la présente description, et le cas échéant de ses connaissances générales. En particulier, la force d'agitation peut être adaptée par l'homme du métier en fonction de la viscosité de l'émulsion de Pickering de départ, et en fonction de l'accroissement de viscosité pendant la préparation de l'émulsion HIPE, qui dépend notamment de la viscosité de la phase hydrophobe qui est ajoutée.

Dans certains modes de réalisation, l'étape d'agitation avec un dispositif du type Ultraturrax™ peut être réalisée selon deux phases, respectivement une première phase au cours de laquelle on applique une première force d'agitation et une seconde phase au cours de laquelle on applique une seconde force d'agitation.

A titre illustratif, on peut réaliser l'étape d'agitation avec (i) une première phase d'agitation à 11000 tours par minute et (ii) une seconde phase d'agitation à 15000 tours par minute, par exemple avec une durée approximativement identique pour la première et la seconde phase d'agitation.

Avantageusement, l'étape d'agitation du mélange émulsion de Pickering / phase hydrophobe ajoutée est réalisée à température ambiante, c'est-à-dire en général à une température allant de 15°C à 25°C, et le plus souvent allant de 18°C à 23°C.

*Concentration de la composition d'émulsion*

Selon un second mode de réalisation, le procédé peut être poursuivi par une étape de concentration, pour former l'émulsion MIPE ou HIPE (étape b.2)).

Cette étape de concentration conduit à retirer la phase continue hydrophile par une technique adaptée, choisie par exemple parmi :

- le crémage/sédimentation par gravité,
- la centrifugation (par exemple 2000g pendant 10 minutes),
- la filtration (avantageusement système à membrane poreuse classique ou d'ultrafiltration en continu),
- les méthodes osmotiques,
- les méthodes de cryo-concentration ou le séchage (dans des conditions pour lesquelles seule la phase continue est évaporée).

Comme cela est montré dans les exemples, dans une émulsion MIPE ou HIPE selon l'invention, la valeur du rapport volume de phase dispersée hydrophobe / volume d'émulsion (et donc également la valeur du rapport volume de phase dispersée hydrophobe / volume de phase continue hydrophile) dépend en particulier :

- de la concentration en chacun des constituants (phase hydrophile, phase hydrophobe, nanocristaux),
- du procédé d'obtention de l'émulsion (ultrason, rotor stator, etc.), et
- des conditions utilisées (vitesse, temps, température, énergie, volume, etc.).

Les paramètres de ces techniques seront adaptés en fonction de l'échantillon.

De tels procédés sont par exemple décrits dans les documents suivants : « Emulsions: Theory and Practice », Paul Becher Third Edition, Oxford University Press 2001 (ISBN 0-8412-3496-5) ou « High internal phase emulsions (HIPEs) - Structure, properties and use in polymer preparation », Cameron NR; Sherrington DC, BIOPOLYMERS LIQUID CRYSTALLINE POLYMERS PHASE EMULSION, ADVANCES IN POLYMER SCIENCE, Volume: 126, Pages: 163-214, 1996.

### La phase hydrophobe

Dans certains modes de réalisation, la phase hydrophobe qui est ajoutée à l'émulsion de Pickering est identique à la phase hydrophobe constituant la phase dispersée hydrophobe contenue dans ladite émulsion de Pickering.

Dans d'autres modes de réalisation, la phase hydrophobe qui est ajoutée à l'émulsion de Pickering est distincte de la phase hydrophobe contenue dans ladite émulsion de Pickering.

Préférentiellement, lorsque la phase hydrophobe ajoutée à l'émulsion de Pickering est distincte de la phase hydrophobe contenue dans ladite émulsion de Pickering, on utilise une phase hydrophobe ajoutée qui est miscible à la phase hydrophobe contenue initialement dans l'émulsion de Pickering.

La phase hydrophobe est choisie parmi les huiles végétales, les huiles animales, les huiles minérales, les huiles de synthèse, les solvants organiques hydrophobes et les polymères liquides hydrophobes.

La phase hydrophobe peut être choisie parmi un alcane ou un cycloalcane, substitué ou non substitué. Les exemples illustrent des modes de réalisation d'une émulsion HIPE selon l'invention respectivement avec des alcanes et des cycloalcanes.

Les exemples montrent que d'excellents résultats sont obtenus en utilisant, comme phase hydrophobe, un alcane ayant un nombre d'atomes de carbone supérieur à 5.

Pour la phase hydrophobe, un alcane ayant plus de 5 atomes de carbone englobe les alcanes ayant plus de 6, 7, 8, 9, 10, 11, 12, 13, 14, 15, 16 ou plus de 17 atomes de carbone, c'est-à-dire notamment, selon la nomenclature conventionnelle, les alcanes en $C_6$-$C_{18}$ et qui sont de formule $C_n H_{2n+2}$. Lesdits alcanes peuvent être linéaires ou ramifiés.

Lesdits alcanes englobent les alcanes linéaires ou ramifiés des types hexane, heptane, octane, nonane, décane, undécane, dodécane, tridécane, tétradécane, pentadécane, hexadécane, heptadécane et octadécane.

Les alcanes substitués englobent les alcanes linéaires ou ramifiés ci-dessus dont au moins un atome d'hydrogène est substitué par un halogène choisi parmi le chlore, le brome, l'iode ou le fluor. La substitution d'au moins un atome d'hydrogène, englobe la substitution de 2, 3, 4 ou 5 atomes d'hydrogène.

Les exemples montrent aussi que d'excellents résultats sont obtenus en utilisant, comme phase hydrophobe, un cycloalcane ayant au moins 6 atomes de carbone, ledit cycloalcane étant substitué ou non substitué.

Dans certains modes de réalisation, ledit cycloalcane est un cyclohexane non substitué ou substitué. Le cyclohexane peut être substitué par 1, 2, 3 ou 4 atomes d'halogène choisi parmi le chlore, le brome, l'iode ou le fluor.

La phase hydrophobe peut encore, comprendre un mélange de tels alcanes, par exemple sous la forme d'une huile de paraffine.

Dans certains modes de réalisation, la phase hydrophobe comprend un ou plusieurs monomères hydrophobes polymérisables, d'un type connu.

Dans d'autres modes de réalisation, la phase hydrophobe consiste essentiellement en une composition d'un monomère hydrophobe ou d'un mélange de monomères hydrophobes. A titre illustratif, la phase hydrophobe peut consister essentiellement en une composition de monomères de styrène.

Les modes de réalisation dans lesquels la phase hydrophobe comprend, ou consiste en, un monomère hydrophobe ou une combinaison de monomères hydrophobes, sont utiles en particulier pour la fabrication de billes de matériau polymère (par polymérisation de ce(s) monomère(s)).

### La phase hydrophile

Par « phase hydrophile » ou « phase aqueuse », on entend un liquide immiscible avec la phase hydrophobe. On utilise de préférence une phase hydrophile miscible avec l'eau. La phase hydrophile peut être de l'eau, comme cela est illustré dans les exemples.

La phase hydrophile peut être un solvant hydrophile, de préférence un solvant portant des groupes hydroxyle, tels que des glycols. Pour la phase hydrophile, les glycols englobent le glycérol et les polyéthylène glycols.

La phase hydrophile peut également contenir des agents hydrosolubles texturants, notamment épaississants ou viscosifiants, tels que des polysaccharides (par exemple dextran ou xanthane, ce dernier étant très utilisé dans les applications alimentaires).

La phase hydrophile peut être constituée, en partie ou totalement, par un liquide organique choisi parmi un alcool tel que l'éthanol, ou encore l'acétone.

La phase hydrophile peut comprendre un seul liquide ou un mélange de plusieurs liquides.

L'homme du métier peut aisément adapter la constitution de la phase hydrophile, notamment en fonction de l'émulsion MIPE ou HIPE finale qui est désirée. A titre illustratif, lorsqu'un alcool tel que l'éthanol est utilisé pour former la phase hydrophile, il peut être avantageux que la phase hydrophile ne soit pas constituée exclusivement d'éthanol, afin d'éviter d'induire la précipitation d'au moins une partie des nanocristaux de cellulose dans la phase hydrophile. Afin d'éviter cet inconvénient, l'homme du métier utilisera alors préférentiellement une phase hydrophile comprenant un mélange eau/éthanol

Dans certains modes de réalisation, la phase hydrophile peut comprendre diverses substances additionnelles ou combinaison de substances additionnelles utiles pour l'application industrielle qui est recherchée pour l'émulsion MIPE ou HIPE, tels que des principes actifs de médicament.

Dans certains modes de réalisation, la phase hydrophile comprend un ou plusieurs monomères hydrophiles, qui peuvent être subséquemment polymérisés au sein de l'émulsion MIPE ou HIPE.

Dans certains modes de réalisation, la phase hydrophile comprend un ou plusieurs monomères hydrophiles polymérisables, d'un type connu.

Dans d'autres modes de réalisation, la phase hydrophile consiste essentiellement en une composition d'un monomère hydrophile ou d'un mélange de monomères hydrophiles. A titre illustratif, la phase hydrophile peut consister essentiellement en une composition de monomères hydrophiles de type acrylate.

Les modes de réalisation dans lesquels la phase hydrophile comprend, ou consiste en, un monomère hydrophile ou une combinaison de monomères hydrophiles, sont utiles en particulier pour la fabrication de matériau polymère poreux.

### Composition d'émulsion MIPE ou HIPE selon l'invention

La composition d'émulsion formée comprend une phase interne hydrophobe dispersée dans une phase continue hydrophile, du type à moyenne phase interne (MIPE) ou à haute phase interne (HIPE).

Les définitions développées ci-dessus dans le cadre du procédé, notamment sur le pourcentage de phase interne, la composition des phases ou leurs proportions, s'appliquent encore ci-dessous.

Cette composition d'émulsion comprend des nanocristaux de cellulose localisés à l'interface entre la phase interne hydrophobe et la phase hydrophile.

Selon l'invention, la composition d'émulsion possède un pourcentage de phase interne supérieur à 55%.

Selon un mode de réalisation, l'émulsion formée est avantageusement du type à moyenne phase interne (MIPE), possédant un pourcentage de phase interne compris entre 55% et 75%, avantageusement encore entre 60% et 75%, avantageusement encore entre 65% et 75% et avantageusement encore entre 70% et 75%.

Selon un autre mode de réalisation, l'émulsion formée peut encore être du type à haute phase interne (HIPE), possédant un pourcentage de phase interne supérieur à 75%, de préférence encore supérieur à 80%, de préférence encore supérieur à 85% voire encore supérieur à 90%. Ce pourcentage de phase interne est encore avantageusement compris entre 80% et 90%, de préférence entre 85% et 90%.

Dans certains modes de réalisation, on forme à l'étape b) une émulsion MIPE ou HIPE ayant un rapport volumique phase interne hydrophobe / phase continue hydrophile supérieur à 60/40, de préférence encore supérieur à 80/20.

Par « supérieur à 60/40 » ou « d'au moins 60/40 », on entend une phase interne hydrophobe dont la valeur est avantageusement supérieure à 60 dans le rapport volumique, à savoir notamment 65/35, 70/30, 75/25, 80/20, 85/15 ou 90/10.

Par « supérieur à 80/20 » ou « d'au moins 80/20 », on entend une phase interne hydrophobe dont la valeur est avantageusement supérieure à 80 dans le rapport volumique, à savoir notamment 85/15 ou 90/10.

### Applications industrielles d'une composition d'émulsion MIPE ou HIPE selon l'invention

Comme cela a déjà été mentionné précédemment dans la présente description et est illustré dans les exemples, une émulsion MIPE ou HIPE selon l'invention peut être obtenue dans l'objectif de préparer une mousse sèche ou encore une émulsion sèche, par exemple par simple lyophilisation de l'émulsion MIPE ou HIPE.

Pour la préparation d'une mousse sèche, on utilise préférentiellement une phase hydrophobe qui peut être évaporée par lyophilisation. Ainsi, en soumettant une émulsion MIPE ou HIPE de l'invention à une étape de lyophilisation, on évapore à la fois la phase hydrophile et la phase hydrophobe, de manière à obtenir une mousse formée d'un réseau cellulosique, ledit réseau cellulosique résultant des nanocristaux de cellulose localisés, dans l'émulsion MIPE ou HIPE de départ, à l'interface phase hydrophobe/phase hydrophile.

Notamment, les exemples illustrent la fabrication d'un matériau de mousse de cellulose, par simple lyophilisation d'une émulsion HIPE selon l'invention.

La mousse sèche peut être utilisée en tant que support solide dans diverses applications industrielles, y compris comme matériau d'isolation thermique ou phonique, ou encore comme biomatériau support.

Le produit résultant, c'est à dire la mousse cellulosique, possède une grande surface spécifique de matériau cellulosique, et peut être utilisé notamment comme support de principe(s) actif(s), par exemple comme support de principe(s) actif(s) pharmaceutiques, humains ou vétérinaires.

A titre illustratif, de tels supports d'intérêt pharmaceutique peuvent être obtenus lorsque le ou les principe(s) actif(s) sont ajouté(s) au préalable à l'émulsion MIPE ou HIPE, soit dans la phase hydrophobe, soit dans la phase hydrophile, en fonction des caractéristiques d'hydrophilicité du ou des principe(s) actif(s) considéré(s).

Dans certains modes de réalisation, lesdits supports cellulosiques peuvent comprendre à la fois (i) un ou plusieurs principe(s) actif(s) hydrophobe(s), (ii) un ou plusieurs principe(s) actif(s) hydrophile(s) et le cas échéant (iii) un ou plusieurs principe(s) actif(s) amphiphile(s).

Dans ces modes de réalisation, chaque principe actif peut être ajouté (i) soit dans l'une des phases hydrophile ou hydrophobe utilisée pour la préparation d'une émulsion de Pickering à l'étape a) du procédé de l'invention, (ii) soit dans l'émulsion de Pickering utilisée pour obtenir l'émulsion MIPE ou HIPE finale, (iii) soit encore dans la phase hydrophobe qui est ajoutée à l'étape b) du procédé pour obtenir l'émulsion MIPE ou HIPE finale.

L'invention a donc encore pour objet un procédé de préparation d'une mousse sèche de cellulose comprenant les étapes suivantes :

a) fournir une émulsion MIPE ou HIPE telle que définie dans la présente description, de préférence une émulsion MIPE ou HIPE obtenue selon le procédé spécifié dans la présente description,

b) éliminer la phase hydrophile et la phase hydrophobe de ladite émulsion MIPE ou HIPE par évaporation, de préférence par lyophilisation, afin d'obtenir la mousse sèche de cellulose.

Une émulsion MIPE ou HIPE selon l'invention peut être également utilisée pour la fabrication d'une émulsion sèche, par évaporation de la phase hydrophile, par exemple par lyophilisation, et maintien de la phase hydrophobe. Dans ces modes de réalisation, la phase hydrophobe peut contenir une ou plusieurs substance(s) d'intérêt, par exemple un ou plusieurs principe(s) actif(s) d'intérêt pharmaceutique.

Une émulsion MIPE ou HIPE selon l'invention peut également être utilisée pour la fabrication de matériaux polymères poreux, principalement par addition de monomères hydrophiles polymérisables dans la phase aqueuse, puis polymérisation *in situ desdits* monomères hydrophiles.

Dans d'autres aspects, une émulsion MIPE ou HIPE selon l'invention peut être utilisée pour la fabrication de billes de matériau polymère, principalement par addition de monomères hydrophobes dans la phase dispersée hydrophobe, puis polymérisation desdits monomères.

Les matériaux polymères peuvent être utilisés comme matériau pour la fabrication de dispositifs médicaux y compris de matériau support pour des principes actifs physiologiquement actifs, ou encore de matériau support pour des prothèses médicales.

Les techniques d'obtention de matériaux polymères, soit des blocs de matériau polymère poreux, soit des billes de matériau polymère, à partir de différents types d'émulsion, sont connus en elles-mêmes dans l'état de la technique.

Dans certains modes de réalisation, lesdits monomères d'intérêt sont déjà présents dans la phase continue hydrophile ou dans la phase dispersée hydrophobe qui est utilisée pour l'obtention de la composition d'émulsion de Pickering qui est fournie au début du procédé selon l'invention.

Dans d'autres modes de réalisation, lesdits monomères d'intérêt sont présents dans la phase hydrophobe qui est ajoutée à l'émulsion de Pickering de départ, à l'étape de réalisation de l'émulsion MIPE ou HIPE proprement dite.

Dans encore d'autres modes de réalisation, lesdits monomères d'intérêt sont ajoutés ultérieurement, à l'émulsion MIPE ou HIPE qui a déjà été obtenue.

Dans encore d'autres modes de réalisation, les monomères d'intérêt peuvent être ajoutés successivement à différentes étapes, dans le procédé d'obtention de l'émulsion MIPE ou HIPE selon l'invention, et/ou après obtention de la composition d'émulsion MIPE ou HIPE selon l'invention.

Dans certains modes de réalisation, le ou les polymères sont utilisés en combinaison avec un ou plusieurs agents de réticulation.

Pour polymériser le ou les polymères d'intérêt, on ajoute classiquement un ou plusieurs composés initiateurs de la polymérisation appropriés.

A titre illustratif, l'utilisation d'émulsions, y compris d'émulsions HIPE huile-dans-l'eau, pour la fabrication de matériaux polymères, est par exemple décrit dans la demande PCT n° WO 2009/013500 ou encore dans les brevets US 6,218,440 et US 4,472,086,

La présente invention est en outre illustrée, sans y être limitée, par les exemples suivants.

## EXEMPLES

### Exemple 1 : Préparation d'une émulsion huile-dans-l'eau de Pickering stabilisée par des nanocristaux de cellulose

#### A. Protocoles

Protocole 1 : Préparation de nanocristaux de cellulose bactérienne

Le procédé d'obtention des nanocristaux de cellulose bactérienne est décrit par exemple dans le document N R Gilkes et al., J of Biological chemistry 1992, 267 (10), 6743-6749.

Des fragments de BMCC sont nanofibrilés dans un mélangeur Waring, à pleine vitesse, dans une suspension aqueuse contenant des cubes de glace de sorte à combiner des stress de cisaillement et d'impact.

La pâte ainsi obtenue est égouttée au travers de filtres polyamides, puis suspendue dans une solution d'hydroxyde de sodium 0,5 N sous agitation dans un ballon fermé pendant deux heures à 70°C.

Après élimination des éléments alcalin par le biais de rinçages multiples avec de l'eau ajustée à pH 8, une étape de blanchiment est réalisée avec du chlorite de sorte à obtenir un composé de type hollocellulose, tel que décrit dans Gilkes et al.(Gilkes, N. R.; Jervis, E.; Henrissat, B.; Tekant, B.; Miller, R. C.; Warren, R. A. J.; Kilburn, D. G., The absorption of a bacterial cellulase and its 2 isolated domains to crystalline cellulose. J. Biol. Chem. 1992, 267 (10), 6743-6749).

Typiquement, une solution de $NaClO_2$, 17 g/L, est mélangée avec un volume identique de tampon acétate pH 4,5 (27 g de NaOH +75 g d'acide acétique par litre).

La cellulose bactérienne blanchie est ensuite suspendue et chauffée sous agitation à 70°C, pendant deux heures.

Ces étapes de traitement alcalin et de blanchiment sont répétées au moins une fois, pour l'obtention d'une pâte blanchie.

Cette cellulose bactérienne est ensuite hydrolysée au moyen d'une solution d'acide chlorhydrique (2,5 N, deux heures).

Les composés acides sont éliminés par les opérations successives jusqu'à neutralité : centrifugation (10000g pendant 5 minutes) et dispersion dans une solution purifiée 18 Mohm.

Les nanocristaux de cellulose ainsi obtenus sont conservés à 4°C sous la forme d'une suspension 1%, avec ajout d'une goutte de $CHCl_3$ par 250 mL de suspension.

Protocole 2 : Préparation de nanocristaux de cellulose bactérienne post-sulfatés

Une suspension aqueuse de nanocristaux de cellulose bactérienne 1,34%, obtenue selon le protocole 1, est mélangée avec une solution de $H_2SO_4$ 2,2 M (soit un ratio 3/2 v/v) sous agitation vigoureuse à température ambiante.

Les nanocristaux de cellulose sulfatés sont récupérés par lavage des billes à l'eau distillée, et centrifugation successive depuis 10000 tr/min jusqu'à 76000 tr/min pendant 10 à 30 minutes, pour obtenir une suspension colloïdale.

Enfin, le produit collecté est dialysé jusqu'à neutralité, et les électrolytes résiduels sont éliminés sur résine échangeuse d'ions (résine à lit mélangé TMD-8,).

Protocole 3 : Désulfatation de nanocristaux de cellulose bactérienne post-sulfatés

La suspension de nanocristaux de cellulose bactérienne post-sulfaté à 2,2 % selon le protocole 2, puis chauffée durant trois heures à 100°C dans HCl 2,5 N, puis lavée par centrifugation à 6000 tr/min pendant 5 minutes à six reprises.

Enfin, le produit collecté est dialysé jusqu'à neutralité, et les électrolytes résiduels sont éliminés sur résine échangeuse d'ions (résine à lit mélangé TMD-8).

Protocole 4 : préparation de nanocristaux de cellulose sulfatés issus de coton

Le procédé d'obtention des nanocristaux de cellulose de coton est décrit par exemple dans le document Elazzouzi-Hafraoui et al. (2008).

25 g de papier est mixé dans 900 mL d'eau déionisée, jusqu'à obtention d'un mélange homogène.

165 mL d'acide sulfurique à 98% sont ajoutés. Le produit obtenu est maintenu à 72°C sous agitation durant 40 minutes.

La suspension est ensuite refroidie, lavée à l'eau ultrapure par centrifugations successives à 8000 tr/min pendant 15 minutes, et dialysée jusqu'à neutralité pendant trois jours contre de l'eau distillée.

Les électrolytes résiduels sont ensuite extraits au moyen d'une résine à lit mélangé (TMD-8, forme hydrogène et hydroxyle) pendant 4 jours.

La dispersion finale, constituée de coton sulfaté, est conservée à 4°C.

Protocole 5 : Désulfatation de nanocristaux de coton sulfaté

La désulfatation des nanocristaux de coton sulfatés selon le protocole 4 est réalisée par un traitement acide, au moyen de 5 mL d'une solution d'HCl 5 N ou d'une solution d'acide trifluoroacétique 10 N (TFA), ajoutée à 5 mL d'une suspension de nanocristaux de coton sulfatés à une concentration de 13 g/L.

Ce traitement acide est mis en oeuvre par chauffage à 98-100 °C sous agitation, pendant 1, 2, 5 ou 10 heures.

De manière alternative, 5 mL d'une solution TFA 10M est ajouté à 5 mL de nanocristaux de coton, avec une incubation durant 10 heures à 80°C sous agitation.

Les deux produits obtenus ont été rincés à l'eau par centrifugation (à six reprises, 6000 tr/min pendant 5-7 minutes).

Protocole 6 : Mesure du degré de sulfatation par titration conductimétrique

La titration conductimétrique permet de déterminer le degré de sulfatation des nanocristaux de cellulose.

Un tel procédé est décrit par exemple dans le document Goussé et al., 2002, Polymer 43, 2645-2651.

50 mL d'une suspension aqueuse de nanocristaux de cellulose (0,1 % poids/volume) sont maintenus sous agitation et dégazage pendant 10 minutes, avant titration avec une solution de NaOH 0,01 M.

La quantité de sulfate greffé est calculée en tenant compte du fait qu'un seul groupement hydroxyle OH peut être substitué par unité glucose, conduisant à un degré de substitution en sulfate (DS) donné par les équations suivantes :

$$DS = (V_{eq} \times C_{NaOH} \times M_w)/m$$

$$M_W = 162/(1 - (80 \times V_{eq} \times C_{NaOH}/m))$$

dans lesquelles

$V_{eq}$ est la quantité de NaOH en mL pour atteindre le point d'équivalence,
$C_{NaOH}$ est la concentration du NaOH exprimée en mol/L,
$M_w$ est le poids moléculaire moyen d'une unité glucose,
m est la masse de cellulose titrée,
80 correspond à la différence entre le poids moléculaire d'une unité glucose sulfatée et le poids moléculaire d'une unité glucose non sulfatée.

La valeur obtenue par ces équations doit être corrigée par la fraction d'unité glucosidique en surface (GSF), pour obtenir le degré de substitution en surface désigné « DSs ».

Selon la structure des chaînes cellulosiques, seuls les groupes OH primaires (en C6) peuvent être estérifiés, et seulement 50% de ces groupes OH sont accessibles à la surface en raison de la conformation en alternance. Le DSs maximal est ainsi de 0,5.

Etant donné que les échantillons varient en morphologie et pour une application générale à tous les différentes particules cellulosiques, une équation générale a été définie afin de déterminer la valeur de fraction de glucose en surface (GSF) tenant compte du ratio de la section transversale (k) quelle que soit la longueur des particules.

Ainsi, pour une largeur donnée (Wxl) et un ratio d'aspect (k), on a :

$$GSF(k)=((2*((k*0{,}596)+0{,}532))/Wxl)-4*((k*0.532*0.596)/Wxl^2)$$

### Protocole 7 : Microscopie électronique en transmission (TEM)

20 $\mu$L d'une suspension aqueuse de nanocristaux de cellulose (0,1 % poids/volume) sont déposés sur une grille carbonée pour microscopie électronique, l'excès de solvant absorbé et l'échantillon est marqué par ajout d'acétate d'uranyle (2% dans l'eau).

Cette grille pour microscopie électronique est ensuite séchée dans une étuve à 40°C.

Les grilles ont ensuite été observées avec un microscope électronique en transmission de marque JEOL (80kV).

### Protocole 8 : Préparation d'une émulsion H/E stabilisée par des nanocristaux.

Une première émulsion de Pickering huile dans l'eau est préparée en utilisant une phase aqueuse contenant une concentration connue de nanocristaux de cellulose.

Les émulsions ont été préparées en utilisant un ratio 30/70 huile/eau à partir d'une phase aqueuse contenant des nanoparticules à une concentration de 0,5 % en poids, par rapport au poids de l'émulsion (sans dilution supplémentaire).

Dans un tube Eppendorf, 0.3 mL d'hexadécane sont ajoutés à 0,7 mL de la suspension aqueuse ; pendant 30 secondes, le mélange est soumis à un traitement alternant 2 secondes de traitement ultrason et 5 secondes de repos.

### Protocole 9 : Test de stabilité, microscopie optique

Les émulsions obtenues selon le protocole 8 sont centrifugées pendant 30 secondes à 10000 g ; Etant donné la différence de densité entre l'hexadécane et l'eau un crémage est observé. Le volume d'émulsion est évalué avant et après centrifugation.

Environ 15 $\mu$L de la solution de Pickering est incorporé dans 1 mL d'eau distillée. Le produit est mélangé par vortex, puis une goutte est déposée sur une lamelle pour observation au microscope.

Le diamètre des gouttelettes est mesuré à partir des images obtenues par analyses d'images en utilisant un programme « imageJ »,

Ces résultats ont par ailleurs été comparés à la distribution des tailles de gouttes déterminée par un dispositif Malvern MasterSizer employant un dispositif à diffraction de la lumière avec analyse par équation Fraunhofer. Le risque d'agrégation est dans ce cas limité par l'ajout de SDS (Sodium Dodécyl Sulfate) juste avant la mesure.

### Protocole 10 : Microscopie électronique à balayage MEB

Pour préparer l'échantillon d'émulsion pour son observation par microscopie électronique à balayage (MEB), 280-380 mg d'un mélange styrène/initiateur (ratio st: V-65 120:1 poids/poids) sont mélangés avec 1,0 à 1,5 mL de solution à 0,5% d'un solution échantillon d'eau, soumis aux ultrasons pendant 1-2 min et dégazés avec de l'azote pendant 10 minutes.

L'émulsion a été obtenue par ultrasons pendant 30 secondes (impulsion de 2 secondes, séparées de 5 secondes).

Puis 500$\mu$L d'eau sont ajoutés dans le système, traité ensuite par vortex.

Ce système est dégazé avec de l'azote pendant 10 minutes, et la polymérisation a eu lieu à 63 °C sans agitation pendant 24h.

La préparation résultante est soumise à une étape de métallisation selon les techniques conventionnelles de microscopie électronique à balayage, avant observation.

Pour son observation par microscopie électronique à balayage, l'échantillon d'émulsion peut encore être préparé avec un autre initiateur, à savoir l'AIBN (azobisisobutyronitrile), selon le protocole suivant :

- dégazage et agitation de 17,5 mL de suspension de nanocristaux à 3 g/L 50 mM, pendant 10 min sous azote,
- ajout de 7,5 mL de styrène et de 69,8 mg d'AIBN,
- émulsification aux ultrasons pendant 1 min,
- dégazage pendant 10min, et
- polymérisation sous agitation à 70°C, entre 1 h et 24h.

La préparation résultante est soumise à une étape de métallisation selon les techniques conventionnelles de microscopie électronique à balayage, avant observation.

B. Résultats

Résultat 1 : Stabilisation d'une émulsion au moyen de nanoparticules de cellulose bactérienne

Les nanocristaux de cellulose bactérienne sont obtenues selon le protocole 1, et consistent en des particules neutres.

Comme montré ci-dessous, ces nanocristaux présentent d'excellentes propriétés pour former des émulsions de Pickering particulièrement stables.

De telles émulsions ont été réalisées selon le protocole 8, pour différents ratios hexadécane / phase aqueuse, à savoir depuis un ratio 5/95 jusqu'à un ratio 50/50.

Ainsi, la concentration en particules dans les émulsions varie avec la fraction volumique de l'eau dans lesdites émulsions.

L'analyse par microscopie optique selon le protocole 9 donne les résultats précisés dans le tableau 1 ci-dessous.

Tableau 1

| Echantillon (rapport hexadécane-eau) | nombre de gouttes | Aire moyenne $\mu m^2$ | Dn moyen $\mu m$ | Dw moyen $\mu m$ | polydispersité |
|---|---|---|---|---|---|
| 10-90 | 250 | 6.4 | 3.0 | 3.4 | 1.15 |
| 20-80 | 250 | 7.9 | 3.3 | 3.7 | 1.12 |
| 30-70 | 855 | 13.9 | 4.3 | 4.8 | 1.12 |
| 40-60 | 252 | 18.1 | 4.9 | 5.5 | 1.12 |
| 50-50 | 259 | 24.0 | 5.6 | 6.4 | 1.14 |

Les mesures de nombre de gouttes, d'aire moyenne, de diamètre moyen en nombre (Dn moyen), de diamètre moyen en poids (Dw moyen), de polydispersité (Dw moyen / Dn moyen) et de pourcentage d'agrégats, ont été mesurés comme décrit par Putaux et al. (1999, International journal of Biological Macromolecules, Vol. 26 (2-3): 145-150) et par Barakat et al. (2007, Biomacromolecules, Vol. 8 (4) : 1236-1245).

Pour ces différents ratios, approximativement le même diamètre moyen est mesuré par analyse d'image, à savoir $4 \pm 2$ $\mu m$ avec une polydispersité de 1,13 $\pm 0.2$.

La principale différence concerne le taux d'agrégation qui diminue avec la diminution de la quantité de particules par mL de phase hydrophobe.

Selon ces résultats et afin de limiter les phénomènes d'agrégations, un ratio de 30:70 est choisi pour les expériences suivantes.

La stabilité des échantillons, conservés dans des conditions différentes (temps, température), est évaluée selon le protocole 9.

Aucune variation de la taille des gouttelettes n'a été observée, même après le maintien des échantillons pendant un mois à 4°C ou 40°C, ou jusqu'à 3 heures à 80°C.

EP 2 699 335 B1

Résultat 2 : Caractérisation des nanocristaux de cellulose

Les nanocristaux de cellulose bactérienne obtenus selon les protocoles 1 à 5, sont caractérisés par microscopie électronique en transmission conformément au protocole 7.

Les caractéristiques de surfaces de nanocristaux et les caractéristiques de l'émulsion sont déterminées selon les protocoles 6 et 9.

Les résultats obtenus sont récapitulés dans le tableau 2 suivant.

Tableau 2

| Echantillon | Longueur/ épaisseur en nm | DS (sulfate/sucre) | Densité de charge (sulfate/nm$^2$) | Nbre de charge par nanocristaux | Taille des goutellettes ($\mu$m) Dnou image J |
|---|---|---|---|---|---|
| BMCC | 919 / 17 | $1.96*10^{-4}$ | $9.68*10^{-4}$ | 42.9 | 4.3 |
| s-wh | 644 / 17 | $2.41*10^{-3}$ | $1.19*10^{-2}$ | 370.7 | 6.8 |
| d-s-wh | 624 / 12 | $5.92*10^{-4}$ | $2.92*10^{-3}$ | 69.8 | 3.4 |
| Cotton t0 | 189 / 13 | $7.92.10^{-3}$ | 0,123 | 952 | 11.0 |
| Cotton t1h HCl | 157 / 13 | $2.23.10^{-3}$ | 0,035 | 224 | 6.7 |
| Cotton t2h | 147 / 13 | $1.21.10^{-3}$ | 0,019 | 114 | 3.2 |
| Cotton t5h | 141 / 13 | $1.24.10^{-3}$ | 0,019 | 123 | 3.7 |
| Cotton t10h | 117 / 13 | $1.32.10^{-3}$ | 0,020 | 100 | 5.9 |
| Cotton t10h TFA | 128 / 13 | $1.08.10^{-3}$ | 0,017 | 89 | 5.3 |

On précise que, pour le Tableau 2, la densité de charge peut être exprimée indifféremment en $e.nm^{-2}$ ou en $sulfate.nm^{-2}$, du fait que l'ion sulfate porte une charge unique.

Les analyses en microscopie électronique montrent que les particules ont toutes une forme allongée.

Pour tous les nanocristaux de cellulose, l'hydrolyse par l'acide sulfurique a tendance à diminuer la longueur. Par exemple la BMCC est diminuée en passant de 919 nm à 644 nm, sans variation notable de largeur après l'étape de sulfatation.

En revanche, l'hydrolyse par l'acide chlorhydrique a tendance à peler la surface des nanocristaux de cellulose et ainsi à réduire ou même éliminer les groupes sulfate, et donc réduire ou éliminer les charges correspondantes.

L'émulsion correspondante est très stable (au moins une année), et résiste à la congélation et au chauffage (2 heures à 80°C).

Résultat 3 : Influence de la force ionique sur la stabilité des émulsions.

On a préparé des émulsions à partir de nanocristaux de cellulose de coton comme décrit dans le Protocole 8

Pour la préparation d'émulsions, on a utilisé un milieu aqueux ayant des valeurs croissantes de force ionique.

Plus précisément, on a utilisé des milieux aqueux liquides ayant des valeurs croissantes de concentration finale en NaCl, comme indiqué dans le Tableau 3 ci-dessous.

Tableau 3

| NaCl (M) | Epaisseur (mm) | % volumique | Zeta pot (mV) |
|---|---|---|---|
| 0 | 0 | 0 | -55 |
| 0,02 | 9,2 | 42.6 | -35 |
| 0,05 | 9,6 | 44.4 | -25 |
| 0,08 | 9,5 | 44.0 | -10 |
| 0,1 | 9 | 41.9 | ~0 |

(suite)

| NaCl (M) | Epaisseur (mm) | % volumique | Zeta pot (mV) |
|----------|----------------|-------------|---------------|
| 0,2 | 9,08 | 42.0 | ND* |
| 0,5 | 7,97 | 36.9 | ND |
| *ND : Non Déterminé | | | |

Les résultats présentés dans le tableau 3 montrent l'évolution de l'épaisseur de l'émulsion obtenue après crémage (centrifugation) ; il s'agit d'une valeur relative en mm, d'un pourcentage volumique émulsionné et des valeurs de potentiel zeta qui illustre le niveau d'écrantage des charges de surface par le NaCl ajouté.

**Exemple 2 : Obtention d'une émulsion MIPE ou HIPE huile-dans-l'eau**

En premier lieu, on prépare une composition d'émulsion de Pickering stabilisée par des nanocristaux de cellulose ayant un taux de recouvrement par les nanocristaux de cellulose d'au moins 60%, comme décrit à l'exemple 1.
En second lieu, de manière générale, on ajoute une quantité appropriée de phase hydrophobe pour l'obtention d'une émulsion MIPE ou HIPE ayant le rapport volume de phase dispersée hydrophobe / volume d'émulsion qui est désiré, comme cela est illustré en détail ci-dessous.

2.1. Essai d'obtention d'une émulsion du genre MIPE ou HIPE en une étape par formation d'une émulsion de Pickering stabilisée avec des nanocristaux de cellulose, avec des rapports décroissants eau/huile

*a) premier essai d'obtention directe d'une émulsion MIPE ou HIPE*

Pour déterminer s'il est possible d'obtenir une émulsion du genre MIPE ou HIPE directement en émulsionnant une grande quantité d'huile en émulsion de Pickering obtenue conformément au protocole de l'exemple 1, on a préparé 16 émulsions en faisant varier le rapport eau/hexadecane.
On a centrifugé ensuite à 4000g pendant 5 min et, après avoir mesuré l'épaisseur de chaque émulsion de Pickering, on a calculé le pourcentage de phase interne, comme décrit ci-dessous.

*Détermination du pourcentage de phase interne*

On caractérise les émulsions par mesure du surnageant (huile), et le volume d'émulsion, pour déterminer le pourcentage de phase hydrophobe par rapport au volume total d'émulsion. C'est donc le volume d'huile incorporé à laquelle on soustrait l'huile surnageante (non emulsionnée) divisée par le volume d'émulsion.
Les résultats sont présentés sur la Figure 1.
Les résultats de la Figure 1 montrent que les émulsions de Pickering ainsi obtenues ont toujours un pourcentage de phase interne inférieur ou égal à 55%.
Ces résultats montrent qu'il est donc impossible d'obtenir directement une émulsion de type MIPE ou HIPE, en particulier dont le pourcentage de phase interne est supérieur à 55%, à partir d'une suspension de nanocristaux de coton et d'huile (phase hydrophobe).

*b) second essai d'obtention directe d'une émulsion MIPE ou HIPE par centrifugation*

On prépare 7 émulsions de Pickering d'hexadécane de 2 mL en proportion eau/huile de 90/10 dans des tubes de 10 mL.
On ajoute ensuite respectivement : 4, 5, 6 et 7 mL d'hexadécane (notés 4H, 5H, 6H et 7H) et 3 et 4 mL de cyclohexane (notés 3C, 4C). On centrifuge ces émulsions à 4000g pendant 5 mn.
Les résultats sont présentés dans le tableau 4 ci-dessous.

Tableau 4

| Tube | 4H | 5H | 6H | 7H | 3C | 4C |
|------|------|------|------|------|------|------|
| ratio % | 75.0 | 74.8 | 74.4 | 74.8 | 74.5 | 75.1 |

Les résultats montrent qu'un pourcentage de phase interne dans l'émulsion de l'ordre de la limite théorique de 74% en volume de la phase dispersée hydrophobe est systématiquement atteint, mais ne peut être dépassée même en répétant l'étape de centrifugation.

Dans les présents essais, il n'a pas été possible de dépasser l'état de compactage maximal des sphères monodispersées de phase hydrophobe, ou « close packing », en réalisant directement une émulsion de Pickering en une étape.

Mais ces essais ont permis d'obtenir des émulsions dont le pourcentage de phase interne est supérieur à 55% tout en état au maximum de 74-75%, c'est-à-dire des émulsions du type MIPE.

<u>2.2.- Essai de préparation d'une émulsion HIPE selon l'invention, à partir d'une émulsion de Pickering qui n'est pas à l'état de close packing.</u>

On a préparé 5 émulsions de Pickering de 2 mL comme décrit ci-dessus, dans des flacons de 50 mL et on a ajouté respectivement 5, 10, 12.5, 13 et 15 mL d'hexadécane.

On a réalisé une émulsion en soumettant le mélange obtenu à une étape d'agitation, à l'aide d'un dispositif Ultraturrax™, pendant 1 min à 27000 g, sans centrifugation.

On a vérifié ainsi l'influence du volume d'émulsion et du contenant (tube plastique Falcon de 50 mL).

<u>2.3. Préparation d'une émulsion MIPE ou HIPE huile-dans l'eau selon l'invention</u>

On a préparé une émulsion de Pickering stabilisée par des nanocristaux de cellulose avec un taux de recouvrement supérieur à 60% et avec un rapport hexadecane eau de 30/70.

On a ensuite ajouté 5 mL d'hexadécane et émulsionné à l'Ultraturrax™.

On montre que l'on peut ensuite émulsionner n'importe quel volume ajouté de phase hydrophobe. Ainsi, on a préparé 5 échantillons de 5 mL d'une émulsion de Pickering stabilisée par des nanocristaux de cellulose, puis nous avons rajouté respectivement 0, 5, 7.5, 8 et 10 mL d'hexadécane avant de réaliser une étape d'agitation à l'Ultraturrax™.

On a mesuré les volumes des différentes émulsions obtenues, et on a calculé le rapport volume de phase dispersée hydrophobe / volume d'émulsion.

Les résultats sont présentés dans le Tableau 5 ci-dessous.

Tableau 5

| Tube | 5 mL test | 10 mL | 12,5 mL | 13 mL | 15 mL |
|---|---|---|---|---|---|
| ratio % | 73.8 | 84.0 | 86.6 | 87.1 | 87.9 |

Les résultats de l'exemple 2 montrent que :

- On retrouve bien la même valeur (74% ± 1%) dans un tube de 50 mL comme obtenu avec ceux de 10mL. Le contenant et l'augmentation de volume ne modifient pas les résultats obtenus.
- On a pu produire une émulsion MIPE par l'ajout de 5 mL d'hexadécane dans une émulsion de Pickering.
- On a pu produire des HIPE pour les 4 émulsions allant de 10 à 15 mL d'hexadécane ajoutés ayant eu une première étape d'émulsion de Pickering.
- D'autre part, les 4 émulsions allant de 10 à 15 mL d'hexadécane ajoutés sont toutes instables au mélange manuel mais pas celle à 5 mL ajoutés. En effet, une agitation vive et courte suffit à casser l'émulsion HIPE (on retrouve alors l'émulsion de Pickering et un surnageant d'huile). Cependant cet effet est réversible et une ré-émulsification à l'Ultraturrax™ permet d'obtenir à nouveau une HIPE.
- Cependant, il y a maturation de l'émulsion, et après 1 ou 2 jours, les HIPEs possèdent des propriétés accrues de stabilité et ne sont plus « cassables » par agitation (y compris l'émulsion HIPE ayant 88% en volume de phase dispersée hydrophobe).

**Exemple 3 : Préparation d'une émulsion MIPE ou HIPE huile-dans-l'eau (1)**

*Principe général*

On prépare plusieurs émulsions MIPEs ou HIPEs comme décrit à l'exemple 2, toujours dans des tubes Falcon™ de 50 mL, en faisant varier les types d'huiles utilisées comme phase hydrophobe et en faisant varier les volumes ajoutés de phase hydrophobe.

On a étudié notamment (i) la stabilité des émulsions MIPE ou HIPE face à des contraintes mécaniques externes générées par centrifugation et (ii) la structure des émulsions, par microscopie confocale.

## A. Protocoles d'analyse

La microscopie confocale à balayage laser ou MCBL permet d'obtenir une image par fluorescence au centre d'un échantillon par focalisation d'un plan sans découpe de l'échantillon préalable. Il faut donc utiliser des marqueurs fluorescents. On utilisera :

- le composé Bodipy (4,4-difluoro-4-bora-3a,4a-diaza-s-indacene) pour la phase huile: Excité à 564 nm (vert) - Emet dans le rouge
- de la fluorescéine pour la phase eau : Excitée à 485 nm (bleu) - Emet à 525 nm (vert)

Par ailleurs, la numérisation de plusieurs plans suffisamment rapprochés peut donner une représentation 3D d'une tranche fine de l'échantillon.

## B. Confirmation des premiers résultats et résultats complémentaires.

Pour confirmer les résultats précédents et obtenir des informations supplémentaires, on prépare des émulsions de Pickering d'hexadécane (30/70 hexadecane/eau) auxquelles on ajoute de l'hexadécane (H) ou du cyclohexane (C) comme dans la Partie 2 (de 5 mL à 15 mL). Cet ajout est fait en 2 étapes comme précisé dans l'exemple 2.3 lorsque le volume d'huile ajouté est supérieur à 5mL. On réalise une agitation, à l'aide d'un dispositif Ultraturrax™, de toutes les émulsions pendant une durée totale de 1 minute, dans les conditions suivantes : agitation de 30 secondes à une force d'agitation de 11000 tours par minute, suivie d'une agitation de 30 secondes à une force d'agitation de 15000 tours par minute. On obtient alors 12 échantillons d'émulsion dans des tubes Falcon™ de 50 mL, les tubes ayant été notés respectivement 5H, 7H, 9H, 11 H, 13H, 15H, 5C, 7C, 9C, 11C, 13C et 15C.

Pendant l'ajout d'hexadécane, et immédiatement après chaque ajout d'hexadécane (réalisé en 2 fois pour $V_{ajouté} > 5$ mL, voir Exemple 2, § 2.3), on effectue les « mesures » suivantes :

- Temps d'agitation par Ultraturrax™ avant « prise » de l'émulsion apparente
- Epaisseur du surnageant d'huile
- Masse du mélange pour avoir le volume d'huile ajouté précisément
- Observation au microscope

Après ces mesures, on place chaque tube dans une centrifugeuse dont on augmente progressivement la vitesse de rotation. On observe à partir de quelle vitesse de centrifugation, on génère une modification de la structure macroscopique de l'émulsion MIPE ou HIPE.

A partir des mesures effectuées, on obtient les résultats suivants (calculs similaires aux précédents), présentés dans le Tableau 6 placé à la fin de la présente description.

Les résultats de pourcentage de phase interne présentés dans le Tableau 6 sont similaires aux résultats obtenus à l'exemple 2.

Il en résulte que le procédé d'obtention d'une émulsion MIPE ou HIPE décrit dans les exemples est extrêmement reproductible.

Le Tableau 6 (à la fin de la description) présente également les résultats du calcul du pourcentage de phase interne « *MINIMUM*». La valeur de pourcentage de phase interne MINIMUM est calculée en prenant en compte toutes les limites inférieures des incertitudes de lecture de mesure, afin d'accroître la certitude que des émulsions du genre MIPE ou HIPE ont été générées, et qu'il n'y a donc pas eu initialement une surestimation de la valeur de pourcentage de phase interne hydrophobe qui serait due aux incertitudes de mesure. On prend la limite inférieure pour la quantité d'huile rajoutée et le volume de surnageant (mesuré avec la marge haute du ménisque). De plus, on ne prend pas en compte pas le volume d'huile de l'émulsion de Pickering comme volume dispersé.

Dans la pratique, les valeurs de pourcentage « MINIMUM » qui sont présentées dans le Tableau 6 sont extrapolées car les valeurs « MINIMUM » de pourcentage de phase interne hydrophobe sont significativement sous-estimées. Néanmoins, ces valeurs sous-estimées confirment que l'on a effectivement bien obtenu des émulsions du genre MIPEs ou HIPEs dans tous les cas.

On précise que la durée de l'étape d'agitation nécessaire au mélange phase hydrophobe ajoutée / émulsion de Pickering de départ s'accroît avec le volume de mélange à émulsionner (voir ligne 2 du tableau 6).

Par ailleurs, on a tracé sur le graphique de la figure 2 la courbe théorique (courbe n° 1, si la totalité de la phase hydrophobe est sous la forme de phase dispersée hydrophobe, c'est-à-dire si la totalité du volume de la phase hydrophobe est émulsionnée) et les courbes expérimentales donnant le pourcentage de phase interne en fonction du volume ajouté (courbe n°2 : phase hydrophobe de cyclohexane ; courbe n° 3 : phase hydrophobe d'hexadécane).

Les résultats de la figure 2 montrent que les courbes expérimentales sont pratiquement identiques à la courbe théorique, les différences pouvant résulter notamment de l'incertitude de manipulation lors de la préparation de chacun des deux types d'émulsion MIPE/HIPE.

Les résultats de la figure 2 montrent que le volume de phase hydrophobe qu'il est nécessaire d'ajouter à l'émulsion de Pickering de départ, pour obtenir une émulsion MIPE ou HIPE finale, ayant un rapport désiré phase dispersée hydrophobe / volume d'émulsion, peut être déterminé sur la base des valeurs de la courbe théorique, et ceci quel que soit le type de phase hydrophobe utilisé.

A titre illustratif, sur la base indifféremment de la courbe théorique ou de la courbe expérimentale correspondante, on peut prévoir qu'il faut ajouter 100 mL d'huile à 2 mL d'émulsion de Pickering pour obtenir une émulsion HIPE ayant un pourcentage de phase interne (ou volume de phase dispersée hydrophobe sur volume d'émulsion) de 98%.

Les résultats d'un autre essai de comparaison de la variation du pourcentage de phase dispersée en fonction du volume d'émulsion, respectivement pour une émulsion HIPE d'hexadécane et une émulsion HIPE de cyclohexane, sont représentés sur la figure 3.

L'observation des émulsions HIPE au microscope optique a permis de dégager une tendance générale qui nous permet d'émettre des hypothèses sur le mécanisme de stabilisation des gouttes d'huile par les billes de l'émulsion de Pickering initiale.

Dans un premier temps, on remarque qu'il y a une réelle différence entre observer une HIPE en mode relaxé ou sous contrainte (sans lamelle et avec lamelle). En effet, en absence de contrainte, on voit une structure dense en gouttes bien rondes.

Lorsqu'on impose une contrainte (par exemple en appuyant sur la lamelle), les gouttes se déforment pour former des polyèdres et ainsi la quantité d'espace disponible pour la phase dispersante est minimisée.

On en conclut que l'émulsion formée présente une interface visco-élastique très résistante et qu'il peut y avoir déformation des gouttes sans coalescence jusqu'à formation de polyèdres.

#### Exemple 4 : Préparation d'une émulsion HIPE huile-dans-l'eau (2)

On prépare 4 émulsions de Pickering de cyclohexane (2 mL à 90/10) conformément au protocole de l'exemple 1. On ajoute aux émulsions de Pickering du cyclohexane ou de l'hexadécane, et on obtient 8 échantillons contenus dans des tubes notés 5cH, 9cH, 11 cH, 15cH, 5cC, 9cC, 11cC et 15cC (c pour Pickering de cyclohexane ; H pour HIPE d'Hexadécane ; et C pour HIPE de Cyclohexane). Comme le manipulateur pour cette expérience est différent de celui qui a réalisé les émulsions décrites dans es exemples précédents, on prépare aussi deux émulsions HIPEs 9H et 9C comme dans les exemples précédents, à des fins de contrôle inter-expériences. On effectue les mêmes analyses que dans l'exemple précédent sur ces 8 émulsions.

Après mesure, on obtient les mêmes résultats pour 9H et 9C pour les deux manipulateurs. Les résultats confirment donc l'excellente reproductibilité du procédé d'obtention d'émulsions HIPE selon l'invention.

Pour des émulsions HIPE préparées à partir d'émulsions de Pickering de cyclohexane, on obtient les résultats présentés dans le Tableau 7 ci-dessous.

Tableau 7

| Tube | 5cH | 9cH | 11cH | 15cH | 5cH | 9cH | 11cH | 15cH |
|---|---|---|---|---|---|---|---|---|
| % phase interne v/v | 72,6 | 81,5 | 84, 5 | 87,7 | 72,9 | 81,5 | 84,5 | 87,3 |

Les résultats du tableau 7 montrent que l'on obtient presque les mêmes résultats pour les deux huiles, respectivement le cyclohexane et l'hexadécane, tout comme pour un Pickering d'hexadécane.

Les résultats montrent que, globalement, les HIPEs issues de Pickering de cyclohexane ou d'hexadécane sont similaires au niveau des pourcentages de phase interne : pour les deux émulsions, le pourcentage varie presque de la même façon avec le volume ajouté.

#### Exemple 5 : Propriétés de résistance d'une émulsion HIPE à des contraintes mécaniques.

Les résultats de tests de résistance de différentes émulsions HIPE d'hexadecane à la centrifugation sont présentés dans le Tableau 8 ci-dessous.

Tableau 8

| Tube (H=hexadecane) | Intervalle d'accélération où il y a rupture (en g) |
|---|---|
| 5H | 16000 - 20000 |
| 7H | 8000 - 16000 |
| 9H | 10000- 16000 |
| 11H | 10000 - 16000 |
| 13H | 0 - 10000 |
| 15H | 0 - 10000 |

Le moment où on estime que l'émulsion est « cassée » est uniquement déterminé par l'aspect macroscopique.

Au-delà de la valeur de force de centrifugation de rupture, les échantillons sont sous la forme de trois phases bien distinctes : (i) première phase constituée des agrégats de nanocristaux de cellulose localisés à proximité ou sur la paroi du tube, (ii) seconde phase constituée de la phase aqueuse ; et (iii) la troisième phase constituée de la phase huile, laquelle est superposée à la seconde phase.

Cependant, si l'émulsion HIPE a été réalisée par ajout d'un volume inférieur ou égal à 5 mL d'huile dans les conditions opératoires décrites dans le présent exemple, l'émulsion HIPE se reforme. Dans les modes de réalisation dans lesquels le volume d'huile ajouté est supérieur à 5 mL, toujours dans les conditions opératoires décrites dans le présent exemple, la réalisation d'une étape d'agitation à l'aide d'un dispositif Ultraturrax™ suffit pour générer à nouveau une émulsion HIPE. Ces résultats mettent en évidence la totale réversibilité des émulsions HIPE de l'invention.

## Exemple 6 : Caractéristiques de structure d'une émulsion HIPE selon l'invention

On a réalisé une étude en microscopie confocale pour tout d'abord obtenir des images au centre de l'émulsion. En effet, la méthode d'observations faites en microscopie optique en présence ou non de lamelle fausse alors d'une certaine manière l'observation (le plan focal observé est toujours un plan très proche de la lamelle).

Ainsi, nous avons utilisé des lames à puits carrés permettant de laisser un léger espace entre lame et lamelle tout en maintenant les 4 bords de l'interstice clos.

Ainsi, on conserve plus ou moins les conditions physiques existant au centre d'une HIPE contenue dans un récipient tel qu'un Falcon par exemple.

On réalise la microscopie confocale de différents échantillons de Pickering d'hexadécane, de cyclohexane et de HIPEs 5H, 9H, 13H, 5C et 14C.

L'observation des émulsions de Pickering simples n'apporte pas d'information supplémentaire à l'observation par la microscopie. On voit juste que le marqueur de la phase hydrophobe Bodipy se localise proche de l'interface huile/eau. On reproduit ces résultats même lorsqu'on utilise une grande quantité de Bodipy, en l'occurrence 0,25 mg pour 700 $\mu$L d'huile pour le marquage de l'huile dans les HIPEs.

On a utilisé différents types de lames, comme indiqué ci-dessus.

Lorsqu'on utilise une lame classique de microscope ou à une lame à puits large et profond, on observe un système d'émulsion tendu au niveau de l'interface avec les parois de la lamelle (contrainte la plus forte). Partout ailleurs, les gouttes sont bien rondes.

L'utilisation d'un puit définissant des bords pour l'émulsion permet de mimer au mieux ce qui se passe dans un tube Falcon™ de 50 mL (observation identique au centre et sur le bord de la lamelle).

Les microphotographies d'une émulsion de Pickering de départ marquée avec du Bodipy assez concentré (0,25mg pour 700$\mu$L d'huile) sont présentées sur les figures 4A et 4B.

Les microphotographies d'une émulsion HIPE « 13C » (87,5 pour cent de phase interne huileuse cyclohexane pour un rapport eau / huile final 12/88) (stabilisé par 1,8mg de nanocristaux de cellulose), marquée avec du Bodipy assez concentré (0,25mg pour 700$\mu$L d'huile) sont présentées sur les figures 4C et 4D.

## Exemple 7 : Préparation d'un matériau de mousse sèche à partir d'une émulsion HIPE selon l'invention.

On a préparé une émulsion de Pickering avec du cyclohexane. A partir de cela on a préparé une HIPE de cyclohexane d'environ 87% de phase interne (type 13cC). Ces deux préparations ont été lyophilisées à 0,02 mbar pendant environ 12h.

On a observé les mousses sèches de cellulose obtenues par microscopie électronique à balayage (MEB). Les résultats sont représentés sur les figures 5A à 5D.

**Exemple 8 : Influence de la densité de charges de surface et de la salinité sur la texture d'un gel**

Nous avons pu mettre en évidence des différences de textures en fonction à la fois de la densité de charges de surface présentes sur les nanocristaux de cellulose, de la concentration en nanocristaux dans la phase aqueuse et de la concentration en sel (seul NaCl a été testé mais cela est applicable à d'autres sels).

Pour cela, des suspensions à 3 concentrations en nanoccistaux ont été utilisées (3g/L, 5g/L et 8g/L) ; 5 concentrations en sel (0,01 M, 0,02M, 0,05M ; 0,1 M et 0,2M) pour des nanocristaux à deux taux de charge de surface (0,016 e/nm$^2$ et 0,16 e/nm$^2$).

Les HIPEs ont été réalisés en deux étapes : (i) préparation d'émulsions de Pickering avec un ratio eau / huile 90/10, (ii) 3 ajouts suscessifs de 3mL d'huile sous agitation au rotor stator entre 11000 t/min et 19000 t/min.

La texture après 24h est ensuite classifiée selon différentes catégories, entre pas d'émulsion et un gel solide.

Une observation visuelle est mise en oeuvre pour déterminer l'écoulement plus ou moins rapide de l'émulsion dans un tube, lorsqu'on passe de la position verticale à horizontale, de sorte à distinguer :

A : pas d'émulsion stable ;

B : écoulement direct, correspondant à une émulsion en gel non structuré ;

C : écoulement retardé, correspondant à gel liquide ;

D : écoulement assez lent, correspondant à gel visqueux ;

E : écoulement lent, correspondant à gel visco-élastique ;

F : pas d'écoulement, correspondant à gel solide.

Le gel est plus structuré à la fois quand :

- on augmente la salinité,
- on augmente la concentration en nanocristaux,
- on diminue la densité de charge de surface.

Ces résultats ont été évalués par un test qualitatif dont les observations sont regroupées dans les diagrammes de phase des figures 6 allant de l'absence d'émulsion à un gel solide.

Les différences de texture observées nous font penser que la nature des interactions entre les nanocristaux aux interfaces sont différents selon la densité de charge de surface portée par ces nanocristaux et la présence de sel conduisant à des structures interfaciales plus ou moins rigides.

Par exemple, un gel solide peut être obtenu pour la combinaison suivante :

- une concentration en sel supérieure à 0,05M,
- une concentration en nanocristaux de cellulose supérieure à 8g/L, et
- une densité de charge de surface inférieure à 0,016 e.nm$^{-2}$.

Tableau 6

| Tube | 5H | 7H | 9H | 11H | 13H | 15H | 5C | 7C | 9C | 11C | 13C | 15C |
|---|---|---|---|---|---|---|---|---|---|---|---|---|
| Temps avant "gel" (sec) | 5 | 10 | 10 | 20 | 20 | 20 | 5 | 5 | 10 | 40 | 40 | 40 |
| % phase interne v/v | 69,7 | 76,0 | 81,9 | 85,4 | 87,3 | 89,3 | 72,0 | 77,8 | 83,42 | 85,85 | 87,5 | 89,41 |
| *% phase interne MINIMUM* | 59,8 | 69,8 | 77,8 | 82,3 | 84,8 | 87,9 | 61,16 | 70,1 | 80,3 | 83,3 | 84,8 | ND |
| ND : Non Déterminé | | | | | | | | | | | | |

**Revendications**

**1.** Procédé d'obtention d'une émulsion comprenant une phase interne hydrophobe dispersée dans une phase continue hydrophile, possédant un pourcentage de phase interne supérieur à 55%, lequel procédé comprend les étapes suivantes :

a) obtention d'une composition d'émulsion huile-dans-l'eau ayant un rapport volumique phase hydrophobe / phase hydrophile d'au moins 5/95, comprenant une étape d'incorporation de nanocristaux de cellulose dans ladite phase hydrophile, et une étape de formation de l'émulsion par dispersion de ladite phase hydrophobe dans ladite phase hydrophile,

b) obtention de ladite émulsion possédant un pourcentage de phase interne supérieur à 55%, comprenant :

b.1) une étape d'ajout d'un volume de phase hydrophobe à la composition d'émulsion obtenue à l'étape a), et agitation du mélange ainsi obtenu, et/ou

b.2) une étape de concentration de la composition d'émulsion obtenue à l'étape a), par retrait d'au moins une partie de ladite phase hydrophile.

**2.** Procédé selon la revendication 1, **caractérisé en ce que**, à l'issue de l'étape b), l'émulsion formée est du type à moyenne phase interne (MIPE) possédant un pourcentage de phase interne compris entre 55% et 75%.

**3.** Procédé selon la revendication 2, **caractérisé en ce que**, à l'issue de l'étape b), l'émulsion formée est du type à haute phase interne (HIPE) possédant un pourcentage de phase interne supérieur à 75%.

**4.** Procédé selon l'une quelconque des revendications 1 à 3, **caractérisé en ce qu'**à l'étape a), ladite composition d'émulsion a un pourcentage de phase interne inférieur ou égal à 55%.

**5.** Procédé selon l'une quelconque des revendications 1 à 4, **caractérisé en ce qu'**à l'étape a), ladite composition d'émulsion a un rapport volumique phase hydrophobe / phase hydrophile d'au plus 60/40.

**6.** Procédé selon l'une quelconque des revendications 1 à 5, **caractérisé en ce que** l'émulsion préparée à l'étape b) comprend un rapport volumique phase interne hydrophobe / phase continue hydrophile d'au moins 80/20

**7.** Procédé selon l'une quelconque des revendications 1 à 6, **caractérisé en ce que** la phase hydrophobe comprend un liquide hydrophobe ou un mélange de liquides hydrophobes.

**8.** Procédé selon la revendication 7, **caractérisé en ce que** les liquides hydrophobes englobent les alcanes choisis parmi les alcanes linéaires, les alcanes ramifiés, les alcanes cycliques et le mélange de deux au moins desdits alcanes, ledit alcane ayant un nombre d'atomes de carbone allant de 5 à 18 atomes de carbone.

**9.** Procédé selon la revendication 8, **caractérisé en ce que** ledit alcane est choisi parmi l'hexadécane et le cyclohexane.

**10.** Procédé selon la revendication 7, **caractérisé en ce que** les liquides hydrophobes englobent les huiles alimentaires, telles que l'huile de soja ou l'huile de tournesol.

**11.** Procédé selon l'une quelconque des revendications 1 à 10, **caractérisé en ce que** la phase hydrophile comprend un monomère hydrophile, ou un mélange de monomères hydrophiles.

**12.** Composition d'émulsion comprenant une phase interne hydrophobe dispersée dans une phase continue hydrophile, ladite composition comprenant des nanocristaux de cellulose localisés à l'interface entre la phase interne hydrophobe et la phase hydrophile, et ladite composition possédant un pourcentage de phase interne supérieur à 55%.

**13.** Composition d'émulsion selon la revendication 12, **caractérisée en ce que** ladite composition possède un pourcentage de phase interne supérieur à 75%.

**14.** Composition d'émulsion selon l'une quelconque des revendications 12 ou 13, **caractérisée en ce que** ladite composition possède un rapport volumique phase interne hydrophobe / phase continue hydrophile supérieur à 70/30.

**15.** Produit issu d'une composition d'émulsion selon l'une quelconque des revendications 12 à 14, choisi parmi une émulsion sèche, une mousse sèche, un matériau polymère poreux ou des billes de matériau polymère.

**Patentansprüche**

**1.** Verfahren zur Herstellung einer Emulsion mit einer in einer kontinuierlichen hydrophilen Phase dispergierten inneren hydrophoben Phase, die einen Prozentsatz an innerer Phase von mehr als 55 % aufweist, wobei das Verfahren die folgenden Schritte aufweist:

a) Erhalten einer Öl-in-Wasser-Emulsionszusammensetzung, die ein Volumenverhältnis von hydrophober Phase/hydrophiler Phase von mindestens 5/95 aufweist, umfassend einen Schritt des Untermischens von Zellulosenanokristallen in die hydrophile Phase und einen Schritt des Bildens der Emulsion durch Dispergieren der hydrophoben Phase in der hydrophilen Phase,

b) Herstellen der Emulsion, die einen Prozentsatz an innerer Phase von mehr als 55 % aufweist, umfassend:

b.1) einen Schritt des Hinzufügens eines Volumens an hydrophober Phase zu der Emulsionszusammensetzung, die in dem Schritt a) erhalten wird, und Rührens der auf diese Weise erhaltenen Mischung und/oder
b.2) einen Schritt des Konzentrierens der Emulsionszusammensetzung, die in dem Schritt a) erhalten wird, durch Entfernen von mindestens einem Teil der hydrophilen Phase.

2. Verfahren nach Anspruch 1, **dadurch gekennzeichnet, dass** die gebildete Emulsion nach Abschluss des Schritts b) vom Typ der mittleren inneren Phase (MIPE) ist, die einen Prozentsatz an innerer Phase von zwischen 55 % und 75 % aufweist.

3. Verfahren nach Anspruch 2, **dadurch gekennzeichnet, dass** die gebildete Emulsion nach Abschluss des Schritts b) vom Typ der hohen inneren Phase (HIPE) ist, die einen Prozentsatz an innerer Phase von mehr als 75 % aufweist.

4. Verfahren nach einem der Ansprüche 1 bis 3, **dadurch gekennzeichnet, dass** die Emulsionszusammensetzung in dem Schritt a) einen Prozentsatz an innerer Phase von weniger als oder gleich 55 % aufweist.

5. Verfahren nach einem der Ansprüche 1 bis 4, **dadurch gekennzeichnet, dass** die Emulsionszusammensetzung in dem Schritt a) ein Volumenverhältnis von hydrophober Phase/hydrophiler Phase von nicht mehr als 60/40 aufweist.

6. Verfahren nach einem der Ansprüche 1 bis 5, **dadurch gekennzeichnet, dass** die Emulsion, die in dem Schritt b) hergestellt wird, ein Volumenverhältnis von innerer hydrophober Phase/kontinuierlicher hydrophiler Phase von mindestens 80/20 aufweist.

7. Verfahren nach einem der Ansprüche 1 bis 6, **dadurch gekennzeichnet, dass** die hydrophobe Phase eine hydrophobe Flüssigkeit oder eine Mischung von hydrophoben Flüssigkeiten umfasst.

8. Verfahren nach Anspruch 7, **dadurch gekennzeichnet, dass** die hydrophoben Flüssigkeiten die Alkane umfassen, die aus den linearen Alkanen, den verzweigten Alkanen, den cyclischen Alkanen und der Mischung aus mindestens zwei dieser Alkane ausgewählt werden, wobei das Alkan eine Anzahl von Kohlenstoffatomen aufweist, die im Bereich von 5 bis 18 Kohlenstoffatomen liegt.

9. Verfahren nach Anspruch 8, **dadurch gekennzeichnet, dass** das Alkan aus Hexadecan und Cyclohexan ausgewählt wird.

10. Verfahren nach Anspruch 7, **dadurch gekennzeichnet, dass** die hydrophoben Flüssigkeiten Speiseöle wie Sojaöl oder Sonnenblumenöl umfassen.

11. Verfahren nach einem der Ansprüche 1 bis 10, **dadurch gekennzeichnet, dass** die hydrophile Phase ein hydrophiles Monomer oder eine Mischung aus hydrophilen Monomeren umfasst.

12. Emulsionszusammensetzung mit einer in einer kontinuierlichen hydrophilen Phase dispergierten inneren hydrophoben Phase, wobei die Zusammensetzung Zellulosenanokristalle umfasst, die an der Grenzfläche zwischen der inneren hydrophoben Phase und der hydrophilen Phase lokalisiert sind, und wobei die Zusammensetzung einen Prozentsatz an innerer Phase von mehr als 55 % aufweist.

13. Emulsionszusammensetzung nach Anspruch 12, **dadurch gekennzeichnet, dass** die Zusammensetzung einen Prozentsatz an innerer Phase von mehr als 75 % aufweist.

14. Emulsionszusammensetzung nach einem der Ansprüche 12 oder 13, **dadurch gekennzeichnet, dass** die Zusammensetzung ein Volumenverhältnis von innerer hydrophober Phase/kontinuierlicher hydrophiler Phase von über 70/30 aufweist.

15. Produkt, das aus einer Emulsionszusammensetzung nach einem der Ansprüche 12 bis 14 hervorgegangen ist, das aus einer Trockenemulsion, einem Trockenschaum, einem porösen Polymermaterial oder Kugeln aus Polymermaterial ausgewählt ist.

**Claims**

1. A method for producing an emulsion including a hydrophobic internal phase dispersed in a hydrophilic continuous phase, having an internal phase percentage higher than 55%, wherein said method comprising the following steps:

   a) producing an oil-in-water emulsion composition with a hydrophobic phase/hydrophilic phase volume ratio of at least 5/95, including a step for incorporating cellulose nanocrystals into the hydrophilic phase, and a step for forming the emulsion by dispersing the hydrophobic phase in the hydrophilic phase,
   b) producing the said emulsion having an internal phase percentage higher than 55%, including:

   b.1) a step for adding a volume of hydrophobic phase to the emulsion composition produced in Step a), and stirring the mixture thereby produced, and/or
   b.2) a step for concentrating the emulsion composition produced in Step a), by removing at least part of the hydrophilic phase.

2. The method according to claim 1 **characterized in that**, following Step b), the emulsion produced is a medium internal phase emulsion (MIPE) having an internal phase percentage ranging between 55% and 75%.

3. The method according to claim 2 **characterized in that**, following Step b), the emulsion produced is a high internal phase emulsion (HIPE) having an internal phase percentage higher than 75%.

4. The method according to any of the claims 1 to 3, **characterized in that**, in Step a), the emulsion composition has an internal phase percentage that is lower than or equal to 55%.

5. The method according to any of the claims 1 to 4 **characterized in that**, in Step a), the emulsion composition has a hydrophobic phase/hydrophilic phase volume ratio of at most 60/40.

6. The method according to any of the claims 1 to 5 **characterized in that** the emulsion prepared in Step b) includes a hydrophobic internal phase/hydrophilic continuous phase volume ratio of at least 80/20.

7. The method according to any of the claims 1 to 6 **characterized in that** the hydrophobic phase includes a hydrophobic liquid or a mixture of hydrophobic liquids.

8. The method according to claim 7, **characterized in that** the hydrophobic liquid is selected from a linear alkane, a branched alkane, a cyclic alkane or a mixture of at least two of said alkane, wherein the alkane has a number of carbon atoms ranging from 5 to 18 carbon atoms.

9. The method according to claim 8, **characterized in that** the alkane is selected from hexadecane or cyclohexane.

10. The method according to claim 7, **characterized in that** the hydrophobic liquid is selected from an edible oil, as soybean oil or sunflower.

11. The method according to any of the claims 1 to 10, **characterized in that** the hydrophilic phase includes a hydrophilic monomer, or a mixture of hydrophilic monomers.

12. An emulsion composition including a hydrophobic internal phase dispersed in a hydrophilic continuous phase, wherein the composition includes cellulose nanocrystals located at the interface between the hydrophobic internal phase and the hydrophilic phase, and wherein the composition has an internal phase percentage higher than 55%.

13. The emulsion composition according to claim 12, **characterized in that** the composition has an internal phase percentage higher than 75%.

14. The emulsion composition according to any of the claims 12 or 13, **characterized in that** the composition has a hydrophobic internal phase/hydrophilic continuous phase volume ratio higher than 70/30.

15. A product of an emulsion composition according to any of the claims 12 to 14, selected from a dry emulsion, a dry foam, a porous polymer material, or beads made of polymer material.

Figure 1

Figure 2

Figure 3

Figure 4A

Figure 4B

Figure 4C

Figure 4D

Figure 5A

Figure 5B

Figure 5C

Figure 5D

Figure 6A

Figure 6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009013500 A
- WO 2010058148 A
- US 6218440 B
- US 4472086 A

**Littérature non-brevet citée dans la description**

- Particle-Stabilized Surfactant-Free Médium Internal Phase Emulsions as Templates for Porous Nanocomposite Materials: poly-Pickering-Foams. *Langmuir,* 2007, vol. 23, 2398-2403
- **SAMIR et al.** *Biomacromolecules,* 2005, vol. 6, 612-626
- **ELAZZOUZI-HAFRAOUI et al.** *Biomacromolecules,* 2008, vol. 9 (1), 57-65
- **EICHHORN S.J. et al.** Review : current international research into cellulose nanofibres and nanocomposites. *J Mater Sci,* 2010, vol. 45, 1-33
- **HELBERT et al.** *Cellulose,* 1998, vol. 5, 113-122
- **HABIBI Y et al.** TEMPO-mediated surface oxidation of cellulose whiskers. *Cellulose,* 2006, vol. 13 (6), 679-687
- **PAUL BECHER.** Emulsions: Theory and Practice. Oxford University Press, 2001
- **CAMERON NR ; SHERRINGTON DC.** High internal phase emulsions (HIPEs) - Structure, properties and use in polymer preparation. *BIOPOLYMERS LIQUID CRYSTALLINE POLYMERS PHASE EMULSION, ADVANCES IN POLYMER SCIENCE,* 1996, vol. 126, 163-214
- **N R GILKES et al.** *J of Biological chemistry,* 1992, vol. 267 (10), 6743-6749
- **GILKES, N. R. ; JERVIS, E. ; HENRISSAT, B. ; TEKANT, B. ; MILLER, R. C. ; WARREN, R. A. J. ; KILBURN, D. G.** The absorption of a bacterial cellulase and its 2 isolated domains to crystalline cellulose. *J. Biol. Chem.,* 1992, vol. 267 (10), 6743-6749
- **GOUSSÉ et al.** *Polymer,* 2002, vol. 43, 2645-2651
- **PUTAUX et al.** *International journal of Biological Macromolecules,* 1999, vol. 26 (2-3), 145-150
- **BARAKAT et al.** *Biomacromolecules,* 2007, vol. 8 (4), 1236-1245